# EUROPEAN PATENT APPLICATION

(11) **EP 4 804 073 A1**
(43) Date of publication of application: **09.09.2026**
(21) Application number: 26162162.7
(22) Date of filing: 04.03.2026
(51) Int. Cl.: G06F 30/20, G06F 30/39

(54) **GPU-ASSISTED NETWORK SIMULATOR**

(30) Priority: 04.03.2025 US 202563766396 P; 17.02.2026 US 202619541453
(71) Applicant: Mellanox Technologies, Ltd., 2069200 Yokneam (IL)
(72) Inventor: KHASHAB, Sajy, 2069200 Yokneam (IL); SEZHIYAN, Hariharan, 2069200 Yokneam (IL); ABBOUD, Rani, 2069200 Yokneam (IL); CHEN, Ang, 2069200 Yokneam (IL); KADOSH, Matty, 2069200 Yokneam (IL); SHABTAI, Omer, 2069200 Yokneam (IL); NASSAR, Mohammad, 2069200 Yokneam (IL)
(74) Representative: Mathys & Squire

(57) **Abstract**

In one embodiment, a computing system includes a memory to store a definition of a communication topology of a data network, and one or more processors to derive, from the definition, a GPU application to simulate the data network, and simulate the data network by executing the GPU application. The GPU application implements a discrete event simulation that generates and responds to timestamped events, with GPU threads processing events for components defined by the communication topology. The computing system preserves event causality using a decentralized synchronization algorithm in which each component maintains a local timestamp, computes a minimum enqueue time across its input event queues, processes events having timestamps less than or equal to its minimum enqueue time, and propagates a minimum enqueue time promise to its output event queues. The simulation server executes the GPU application using a graphics-processing execution graph defining a directed acyclic graph of GPU kernels.

## Description

### CROSS-REFERENCE TO RELATED APPLICATIONS

This application claims the benefit of U.S. Provisional Patent Application 63/766,396, filed March 4, 2025, whose disclosure is incorporated herein by reference.

### TECHNICAL FIELD

The present disclosure relates generally to network simulation systems and methods, and more particularly but not exclusively to graphics processing unit-based discrete event simulation of data networks.

### BACKGROUND

Network simulation enables network designers and engineers to study the effects and tradeoffs of various network designs with high-fidelity experimental results. Discrete event simulation (DES) is a predominant method for simulating networks, where network components such as switches, network interface cards (NICs), and links communicate by exchanging timestamped events. Events are produced and processed in order according to their timestamps, both for data plane operations such as packet transmission and reception, and for control plane operations such as periodic timers. This approach provides flexibility for defining networking experiments and observing their outcomes with packet-level accuracy.

Modern networks are rapidly growing in both size and speed. The number of devices in large-scale clusters continues to increase, while port bandwidths advance to higher rates. These trends result in a substantial volume of events that simulation systems process during execution. Large-scale networked clusters serve as foundational infrastructure for various workloads, including internet services and artificial intelligence training applications.

Graphics processing units (GPUs) have emerged as computational platforms with characteristics that differ from traditional central processing unit (CPU) architectures. GPUs employ a single instruction multiple threads (SIMT) processing model that uses a large number of parallel arithmetic logic units to execute the same logic across many threads. GPU platforms are equipped with high-bandwidth memory and support hierarchical synchronization primitives. The GPU programming software ecosystem includes frameworks that support general program execution with familiar programming interfaces.

AI servers, such as those containing multiple GPUs interconnected via high-speed fabrics, have become building blocks in modem computing clusters. These servers provide substantial memory capacity and bandwidth, along with interconnection technologies that enable communication between GPUs within the same server. The availability of such hardware platforms presents opportunities for various computational workloads that can leverage parallel processing capabilities.

### SUMMARY

The invention is defined by the claims. In order to illustrate the invention, aspects and embodiments which may or may not fall within the scope of the claims are described herein.

An embodiment that is described herein provides a computing system, including a memory, to store a definition of a communication topology of a data network, and one or more processors, to derive, from the definition, a graphics processing unit (GPU) application to simulate the data network, and simulate the data network by executing the GPU application.

In some embodiments, the GPU application implements a discrete event simulation (DES) that generates and responds to timestamped events.

In other embodiments, the computing system simulates the data network using one or more GPUs executing one or more GPU threads to process the timestamped events for components defined by the definition, the one or more GPU threads being associated with respective components.

In disclosed embodiments, the computing system preserves event causality using a decentralized synchronization algorithm in which each component maintains a respective local timestamp and computes a respective minimum enqueue time across its respective input event queues, each component processes events having timestamps less than or equal to its respective minimum enqueue time, and each component propagates a respective minimum enqueue time promise to its respective output event queues based on the component's local timestamp and a propagation delay to an adjacent component.

In example embodiments, the timestamped events include input events and output events, and for a given component defined by the definition, the GPU application specifies one or more input event queues for queuing the input events to be processed by the given component and one or more output event queues for queuing the output events generated by the given component.

In some embodiments, the input event queues and the output event queues include a plurality of first-in-first-out (FIFO) event queues that collectively emulate behavior of a centralized global priority queue while avoiding contention associated with use of a centralized global priority queue.

In other embodiments, the given component is a switch defined by the definition, the computing system is to maintain a priority queue to organize events across a plurality of incoming ports of the switch to select a next event to be processed by forwarding logic, and at a beginning of an iteration of event processing for the switch, events from a plurality of ingress FIFO queues of the switch are inserted into the priority queue and selecting the next event during the iteration includes dequeuing from a head of the priority queue.

In disclosed embodiments, the computing system further includes a network controller including a first processor to receive the definition of the communication topology, and derive, from the definition, the GPU application, and a simulation server including one or more second processors to receive the GPU application from the first processor, and simulate the data network by executing the GPU application, the one or more second processors include one or more GPUs.

In example embodiments, the first processor derives the GPU application by laying out data in a memory accessible by the one or more GPUs so as to optimize coalesced memory access by the one or more GPUs.

In some embodiments, the simulation server simulates the data network without requiring run-time communication between the one or more GPUs and the first processor after an initial invocation of the GPU application.

In other embodiments, the definition defines the data network as including multiple network adapters, multiple switches, and links interconnecting the multiple network adapters and the multiple switches, and the network adapters, the switches, and the links include components of the data network.

In disclosed embodiments, the simulation server simulates the data network by organizing the components of the data network in consecutive memory locations on the one or more GPUs such that fields of a same component type are fetched together and processed by a same GPU kernel.

In example embodiments, the simulation server simulates the data network by assigning a single GPU kernel of the GPU application to simulate all the network adapters, and assigning separate GPU kernels of the GPU application to simulate at least one layer of switches defined by the communication topology and at least one type of link among the links.

In some embodiments, the simulation server simulates the data network by executing in parallel (i) a plurality of GPU kernels of the GPU application that simulate the links and (ii) a plurality of GPU kernels of the GPU application that simulate the network adapters and the switches.

In other embodiments, the simulation server simulates the data network by executing the GPU application using a graphics-processing execution graph that defines a directed acyclic graph (DAG) of GPU kernels such that, after an initial invocation, kernel launch control flow proceeds on the one or more GPUs until a termination condition is satisfied.

In disclosed embodiments, the termination condition is based on a predefined simulation end time, and each of the components of the data network as simulated maintains a respective internal clock that advances during simulation execution.

In example embodiments, the termination condition is based on flow completion and is satisfied when a number of the network adapters as simulated that complete a flow reaches a total number of the network adapters as simulated.

In some embodiments, the simulation server stores, on the one or more GPUs, one or more program state parameters used to evaluate the termination condition and updates the one or more program state parameters on the one or more GPUs without intervention by the first processor, the one or more program state parameters including one or more of simulation time of each component, a number of simulation errors for each component, or a number of completed components.

There is additionally provided, in accordance with an embodiment that is described herein, a method of simulating a data network, the method including receiving, by a processor, a definition of the data network, deriving, by the processor based on the definition, a graphics processing unit (GPU) application to simulate the data network, and simulating the data network by executing the GPU application.

There is also provided, in accordance with an embodiment that is described herein, a non-transitory computer-readable medium storing program instructions that, when executed by one or more processors, cause the one or more processors to receive a definition of the data network, derive a graphics processing unit (GPU) application to simulate the data network, and simulate the data network by executing the GPU application.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

The present disclosure will be understood from the following detailed description, taken in conjunction with the drawings in which:
Fig. 1 is a block diagram that schematically illustrates a computing system configured for GPU-assisted network simulation, in accordance with an embodiment that is described herein;
Fig. 2 is a block diagram that schematically illustrates a GPU memory architecture for a network simulation system, in accordance with an embodiment that is described herein;
Fig. 3 is a block diagram that schematically illustrates a simulated data network and its relationship to a simulation server, in accordance with an embodiment that is described herein;
Fig. 4 is a block diagram that schematically illustrates a GPU architecture and an associated execution model, in accordance with an embodiment that is described herein;
Fig. 5 is a block diagram that schematically illustrates a granular module decomposition architecture for GPU-based network simulation, in accordance with an embodiment that is described herein;
Fig. 6 is a block diagram that schematically illustrates thread block assignment for simulated switches, in accordance with an embodiment that is described herein;
Fig. 7 is a block diagram that schematically illustrates a data-oriented memory layout for organizing components by type in global memory, in accordance with an embodiment that is described herein;
Fig. 8 is a block diagram that schematically illustrates a kernel assignment and parallel execution architecture for simulating a communication topology, in accordance with an embodiment that is described herein;
Fig. 9A is a flowchart that schematically illustrates a systolic kernel launch order for simulating a data network, in accordance with an embodiment that is described herein;
Fig. 9B is a flowchart that schematically illustrates a packet trajectory through a simulated data network, in accordance with an embodiment that is described herein;
Fig. 10 is a block diagram that schematically illustrates event queue management approaches in a network simulation system, in accordance with an embodiment that is described herein;
Fig. 11 is a block diagram that schematically illustrates an event queue architecture for a component of a simulated data network, in accordance with an embodiment that is described herein;
Fig. 12 is a block diagram that schematically illustrates a switch internal queue design, in accordance with an embodiment that is described herein;
Fig. 13 is a block diagram that schematically illustrates a decentralized minimum enqueue time propagation system, in accordance with an embodiment that is described herein;
Fig. 14 is a block diagram that schematically illustrates mixed timescales and lookahead values across multiple switch modules, in accordance with an embodiment that is described herein;
Fig. 15 is a flowchart that schematically illustrates a graphics-processing execution graph for simulating a data network, in accordance with an embodiment that is described herein;
Fig. 16 is a block diagram that schematically illustrates program state parameters and termination conditions for GPU-based network simulation, in accordance with an embodiment that is described herein;
Fig. 17 is a flowchart that schematically illustrates an event processing algorithm for simulating a data network, in accordance with an embodiment that is described herein;
Fig. 18 is a block diagram that schematically illustrates a multi-GPU transparent scaling architecture for a simulation server, in accordance with an embodiment that is described herein;
Fig. 19 is a block diagram that schematically illustrates a cross-GPU event transfer architecture via cross-GPU event queues, in accordance with an embodiment that is described herein;
Fig. 20 is a flowchart that schematically illustrates a method for simulating a data network using a GPU application, in accordance with an embodiment that is described herein;
Fig. 21 is a block diagram that schematically illustrates a producer-consumer event queue abstraction, in accordance with an embodiment that is described herein; and
Fig. 22 is a block diagram that schematically illustrates a non-transitory computer-readable medium storing program instructions, in accordance with an embodiment that is described herein.

### DETAILED DESCRIPTION OF EMBODIMENTS

### OVERVIEW

Conventional network simulation systems predominantly rely on central processing unit (CPU) platforms and face significant scalability limitations as network sizes and speeds continue to increase. CPU-based discrete event simulators struggle to scale to large topologies that are typical of modern AI clusters, where networks may interconnect hundreds of thousands of devices operating at high link speeds. The sheer volume of timestamped events generated by such large-scale networks creates performance bottlenecks in existing simulation tools. CPU architectures are fundamentally designed with complex cache mechanisms and a relatively small number of high-performance threads, which runs counter to the requirements of network simulation workloads that involve low computational intensity per operation but require processing a large number of discrete events concurrently.

In the context of network simulation, timestamped events represent discrete occurrences that change the state of network components at specific points in simulation time. Examples of timestamped events include packet arrival events that occur when a packet reaches an ingress port of a switch or network adapter, packet departure events that occur when a packet is transmitted from an egress port onto a link, and timer expiration events that trigger periodic control plane operations such as routing table updates or congestion control adjustments. Additional examples include acknowledgment events that signal successful receipt of data packets, flow start events that initiate transmission of a new data flow from a source network adapter, and queue overflow events that indicate when a buffer has exceeded its capacity and packets must be dropped. Each timestamped event carries both a timestamp indicating when the event occurs in simulation time and associated data such as packet headers, payload information, or control signals that the receiving component processes when handling the event.

Network simulation is memory-intensive, not only because data movement such as sending and receiving packets and performing routing table lookups is commonplace, but also because the working set grows substantially as the number of simulated devices increases. When the working set exceeds the capacity of CPU caches, frequent memory access to slower DRAM becomes a bottleneck. Furthermore, conventional simulators typically employ a centralized global event queue sorted by timestamps, which leads to high contention when many threads concurrently access the single shared queue. These scalability constraints severely restrict the utility of network simulators for studying networks at the scale of modem data centers and AI clusters.

Embodiments that are described herein address these challenges by providing a GPU-based network simulation system that leverages the parallel processing capabilities and high-bandwidth memory of graphics processing units to achieve scalable discrete event simulation of data networks. In some embodiments, a computing system comprises a network controller with a first processor that receives a definition of a communication topology and derives a GPU application to simulate the data network, and a simulation server with one or more GPUs (e.g.,, a second processor that may by the same processor as the first processor) that execute the GPU application to perform the simulation. In an example implementation, the GPU application implements a discrete event simulation that generates and responds to timestamped events, with GPU threads processing events for components defined by the communication topology. In certain embodiments, the system employs a granular execution model that decomposes network devices into small modules, such as individual ingress queues, egress queues, and ports of a switch, with each module mapped to a respective GPU thread to maximize vectorized GPU compute and reduce thread divergence.

In some embodiments, the system utilizes module-local event queues rather than a centralized global event queue, where each simulated component has its own input event queues for queuing input events to be processed and output event queues for queuing output events generated by the component. The plurality of first-in-first-out (FIFO) event queues collectively emulate the behavior of a centralized global priority queue while avoiding the contention associated with use of such a centralized queue. In certain embodiments, for high fan-in scenarios such as within a switch, a priority queue is maintained to organize events across incoming ports, with events from ingress FIFO queues inserted into the priority queue at the beginning of an iteration and subsequent event selection involving dequeuing from the head of the priority queue.

In an example implementation, the system preserves event causality using a decentralized synchronization algorithm in which each component maintains a respective local timestamp and computes a respective minimum enqueue time across its input event queues, processes events having timestamps less than or equal to its minimum enqueue time, and propagates a minimum enqueue time promise to its output event queues based on the component's local timestamp and a propagation delay to an adjacent component. This decentralized approach avoids topology-wide synchronization and allows different components to use different lookahead values based on their respective propagation delays, thereby maximizing parallelism.

In some embodiments, the simulation server executes the GPU application using a graphics-processing execution graph that defines a directed acyclic graph of GPU kernels, such that after an initial invocation, kernel launch control flow proceeds on the GPUs until a termination condition is satisfied without requiring run-time communication between the GPUs and the first processor. In certain embodiments, the system scales transparently across multiple GPUs by partitioning the data network across the GPUs and transferring events across GPU boundaries using load/store operations via a shared memory abstraction rather than collective communication primitives, with cross-GPU event queues allocated in a shared memory space accessible by the plurality of GPUs using one-sided get and put operations.

The disclosed solution advantageously achieves orders of magnitude higher simulation throughput compared to CPU-based simulators by fully leveraging GPU parallelism and high-bandwidth memory. The granular module decomposition and module-local event queue design reduce thread contention and enable efficient parallel processing of simulation events. The decentralized synchronization algorithm allows components to process events independently without requiring costly global coordination, while the graphics-processing execution graph eliminates CPU intervention during simulation execution. The transparent multi-GPU scaling architecture enables simulation of network topologies that exceed the memory capacity of any single GPU. These techniques collectively enable accurate simulation of networks at the scale of modem data centers and AI clusters, providing network designers and engineers with the ability to study network designs and obtain insights at unprecedented scale.

### DEFINITIONS

In the present context, the term "computing system" may refer to an arrangement of hardware and software components configured to perform computational tasks, including processing, storing, and communicating data. For example, a computing system may comprise a network controller and a simulation server connected via a communication path, or an AI server containing multiple GPUs interconnected via a high-speed interconnect.

In the present context, the term "memory" may refer to a hardware component or storage medium that retains data and instructions for access by a processor or other computing elements. For example, a memory may be a controller memory that stores a communication topology definition and a GPU application, or a GPU memory comprising shared memory and global memory regions.

In the present context, the term "communication topology" may refer to a specification or arrangement that defines how network components are interconnected and organized within a data network. For example, a communication topology may define a hierarchical structure with core switches, spine switches, and leaf switches interconnected via links, or may specify the connections between network adapters and switches in a simulated data network.

In the present context, the term "data network" may refer to an interconnected system of network components that enables communication and data transfer between devices. For example, a data network may be a simulated network comprising switches, network interface cards, and links, or an AI cluster network interconnecting hundreds of thousands of GPUs.

In the present context, the term "processor" may refer to a hardware component that executes instructions and performs computational operations. For example, a processor may be a controller processor in a network controller that derives a GPU application from a topology definition, or a central processing unit (CPU) that manages system operations.

In the present context, the term "graphics processing unit" or "GPU" may refer to a specialized processor designed for parallel processing that executes computations using multiple threads simultaneously. For example, a GPU may be an NVIDIA A100 or H100 device containing streaming multiprocessors that execute GPU threads in a single instruction multiple threads (SIMT) fashion.

In the present context, the term "GPU application" may refer to a software program or set of instructions configured for execution on one or more GPUs to perform a specified computational task. For example, a GPU application may be a network simulation program derived from a communication topology definition that implements discrete event simulation using GPU kernels.

In the present context, the term "discrete event simulation" or "DES" may refer to a simulation methodology in which the operation of a system is represented as a sequence of events that occur at discrete points in time, with each event changing the state of the system. For example, a discrete event simulation may model packet transmission and reception in a network by processing timestamped events representing packet arrivals and departures at network components.

In the present context, the term "timestamped event" may refer to a data structure or unit of information that includes a timestamp indicating when the event occurs in simulation time and associated data representing the event payload. For example, a timestamped event may represent a packet arrival at a switch port with a timestamp of 100 nanoseconds and data containing the packet header and payload.

In the present context, the term "GPU thread" may refer to an individual execution context within a GPU that performs computations as part of a larger parallel workload. For example, a GPU thread may be assigned to process events for a specific ingress queue of a simulated switch, or may handle the simulation logic for a single network adapter.

In the present context, the term "component" may refer to a discrete element or module within a simulated data network that processes events and maintains state during simulation execution. For example, a component may be a simulated switch that receives packets on ingress ports and forwards them to egress ports, or a network adapter that generates and receives packets.

In the present context, the term "network adapter" may refer to a hardware interface or simulated element that connects a computing device to a network and handles packet transmission and reception. For example, a network adapter may be a network interface card (NIC) that connects an AI server node to a leaf switch in a data center network.

In the present context, the term "switch" may refer to a network device or simulated element that receives packets on input ports and forwards them to output ports based on forwarding decisions. For example, a switch may be a leaf switch that connects network adapters to spine switches, or a core switch at the top of a hierarchical network topology.

In the present context, the term "link" may refer to a communication connection or simulated element that transfers data between two network components. For example, a link may be a within-partition link connecting a leaf switch to a network adapter on the same GPU, or a cross-partition link connecting switches across different GPU partitions.

In the present context, the term "input event queue" may refer to a data structure that stores incoming timestamped events awaiting processing by a component. For example, an input event queue may hold packets received at an ingress port of a switch until the forwarding logic processes them.

In the present context, the term "egress logic" may refer to the processing component within a switch that receives events from multiple forwarding logic modules and determines how to distribute the events to the appropriate egress queues. For example, egress logic may dequeue events from a priority queue and forward the events to egress queues corresponding to respective outgoing ports of the switch.

In the present context, the term "output event queue" may refer to a data structure that stores outgoing timestamped events generated by a component for transmission to adjacent components. For example, an output event queue may hold packets that have been processed by forwarding logic and are awaiting transmission to a downstream link or switch.

In the present context, the term "first-in-first-out" or "FIFO" may refer to a queue discipline in which elements are processed in the order they were added, with the earliest added element being removed first. For example, a FIFO event queue may store incoming packets at an ingress port and dequeue them in arrival order for processing.

In the present context, the term "priority queue" may refer to a data structure that organizes elements according to a priority criterion, enabling retrieval of the highest-priority element. For example, a priority queue may organize events from multiple ingress ports by timestamp to enable selection of the event with the earliest timestamp for processing.

In the present context, the term "forwarding logic" may refer to the processing component or algorithm within a switch that determines how to route packets from input ports to output ports. For example, forwarding logic may examine a packet header and consult a forwarding table to determine the appropriate egress port for the packet.

In the present context, the term "egress logic" may refer to the processing component within a switch that receives events from multiple forwarding logic modules and determines how to distribute the events to the appropriate egress queues. For example, egress logic may dequeue events from a priority queue and forward the events to egress queues corresponding to respective outgoing ports of the switch.

In the present context, the term "decentralized synchronization algorithm" may refer to a coordination method in which individual components independently determine safe processing boundaries without requiring global coordination across all components. For example, a decentralized synchronization algorithm may allow each switch module to compute its own minimum enqueue time based on local state and propagation delays to adjacent components.

In the present context, the term "local timestamp" may refer to a time value maintained by an individual component that tracks the current simulation time for that component. For example, a local timestamp may indicate that a switch module has processed all events up to 500 nanoseconds of simulation time.

In the present context, the term "minimum enqueue time" may refer to a time value representing the earliest timestamp at which a future event may appear in an event queue, used to determine which events are safe to process. For example, a minimum enqueue time of 600 nanoseconds indicates that no events with timestamps earlier than 600 nanoseconds will be enqueued in the associated queue.

In the present context, the term "propagation delay" may refer to the time required for an event or signal to travel between two adjacent components in a simulated network. For example, a propagation delay may be on the order of nanoseconds for communication within a switch or on the order of microseconds for communication between switches.

In the present context, the term "simulation server" may refer to a computing component or system that executes the GPU application to perform network simulation. For example, a simulation server may comprise eight GPUs interconnected via a high-speed interconnect, with each GPU storing and processing a partition of the simulated data network.

In the present context, the term "network controller" may refer to a computing component that receives a topology definition and derives a GPU application for network simulation. For example, a network controller may comprise a CPU that processes a communication topology definition and generates GPU kernels for execution on a simulation server.

In the present context, the term "GPU kernel" may refer to a function or program that executes on a GPU, organized into thread blocks containing multiple threads. For example, a GPU kernel may be a NIC kernel that processes events for all network adapters in the simulation, or a leaf kernel that processes events for all leaf switches.

In the present context, the term "coalesced memory access" may refer to a memory access pattern in which threads within a warp access contiguous memory locations, enabling multiple requests to be satisfied by a single hardware memory transaction. For example, coalesced memory access occurs when adjacent GPU threads access adjacent elements of an array storing switch states in consecutive memory locations.

In the present context, the term "run-time communication" may refer to data exchange or synchronization between components that occurs during the execution of a simulation, as opposed to during initialization or termination. For example, run-time communication between GPUs and a CPU would involve transferring control or data across a PCIe bus during simulation execution.

In the present context, the term "graphics-processing execution graph" may refer to a data structure that defines a directed acyclic graph (DAG) of GPU kernels specifying their execution order and dependencies. For example, a graphics-processing execution graph may define that a NIC kernel executes before a leaf to NIC link kernel, which executes before a leaf kernel, with the sequence repeating until a termination condition is satisfied.

In the present context, the term "termination condition" may refer to a criterion or set of criteria that, when satisfied, causes the simulation to conclude execution. For example, a termination condition may be satisfied when all components reach a predefined simulation end time, or when a specified number of network adapters complete their assigned flows.

In the present context, the term "program state parameters" may refer to variables or data values stored on the GPU that track the progress and status of the simulation. For example, program state parameters may include simulation time for each component, error counts for each component, and the number of completed components.

In the present context, the term "high-speed interconnect" may refer to a communication fabric that enables fast data transfer between GPUs within a server. For example, a high-speed interconnect may be an NVLINK fabric that provides high-bandwidth, low-latency communication between GPUs in a DGX server.

In the present context, the term "shared memory" may refer to a memory region accessible by multiple GPUs or multiple threads within a thread block. For example, shared memory may be memory allocated using NVSHMEM that enables one-sided get and put operations between GPUs, or L1 cache memory shared by threads within a thread block for fast intra-block communication.

In the present context, the term "global memory" may refer to a memory region on a GPU that is accessible by all threads and persists across kernel executions. For example, global memory may store the states of all simulated switches, network adapters, and links for a partition of the data network.

In the present context, the term "cross-GPU event queue" or "Xqueue" may refer to an event queue allocated in shared memory that enables event transfer between components residing on different GPUs. For example, a cross-GPU event queue may store events generated by a switch on one GPU that are destined for a switch on another GPU, with access occurring via one-sided put and get operations.

In the present context, the term "thread block" may refer to an organizational unit of GPU threads that execute together and can share data via shared memory. For example, a thread block may be assigned to simulate a single switch, with individual threads within the block handling different modules such as ingress queues, egress queues, and forwarding logic.

In the present context, the term "warp" may refer to a group of GPU threads that execute the same instruction simultaneously in a single instruction multiple threads (SIMT) fashion. For example, a warp may contain 32 GPU threads that concurrently process events for 32 different ingress queues.

In the present context, the term "module" may refer to a granular functional unit within a simulated network component that is mapped to an individual GPU thread for execution. For example, a module may be a single ingress queue of a switch, an egress queue, a port, or the forwarding logic component.

In the present context, the term "systolic execution workflow" may refer to a kernel launch order based on the hierarchical structure of the network topology, where kernels are launched sequentially according to the topological locations of the components they simulate. For example, a systolic execution workflow may launch kernels in the order of NIC, leaf to NIC link, leaf switch, spine to leaf link, spine switch, core to spine link, and core switch, then reverse for the downward path.

In the present context, the term "partition" may refer to a subset of the simulated data network that is assigned to a single GPU for processing. For example, a partition may contain a portion of the switches, network adapters, and within-partition links, with cross-partition links connecting components across different partitions.

In the present context, the term "lookahead value" may refer to a time interval added to a component's current timestamp to compute the minimum enqueue time promise for its output event queues. For example, a lookahead value may be set based on the propagation delay between a component and its adjacent downstream component.

In the present context, the term "flow completion" may refer to a termination condition based on network adapters completing transmission and acknowledgment of assigned data flows. For example, flow completion may be satisfied when all network adapters in the simulation have successfully sent their entire flows and received all acknowledgment packets.

In the present context, the term "iteration" may refer to a single cycle of event processing in the simulation during which components process events within their respective lookahead windows. For example, an iteration may involve all switches and network adapters processing their safe events, followed by all links transferring events to downstream components.

### SYSTEM DESCRIPTION

Embodiments described herein relate to a GPU-assisted network simulation system that leverages the parallel processing capabilities of graphics processing units to perform discrete event simulation of data networks. The system addresses scalability challenges inherent in conventional CPU-based network simulators by exploiting the architectural characteristics of GPUs, which provide massive thread parallelism and high-bandwidth memory access suited to the computational profile of network simulation workloads.

Network simulation using discrete event simulation techniques models the operation of a data network as a sequence of timestamped events that change the state of network components. Events represent occurrences such as packet arrivals, packet departures, and timer expirations at network elements including switches, network adapters, and links. The simulation processes events in timestamp order to preserve causal relationships between events, thereby producing high-fidelity results that accurately reflect the behavior of the modeled network.

The GPU-assisted network simulation system comprises two principal components: a network controller and a simulation server. The network controller receives a definition of a communication topology that specifies the structure and interconnections of the data network to be simulated. Based on this definition, the network controller derives a GPU application configured to simulate the data network. The GPU application comprises executable code organized as GPU kernels that implement the discrete event simulation logic for the various network components defined by the communication topology.

The simulation server receives the GPU application from the network controller and executes the GPU application using one or more GPUs to perform the network simulation. The simulation server stores the state of the simulated data network in GPU memory and processes timestamped events using GPU threads that execute the GPU kernels. The architecture enables the simulation server to leverage the parallel execution capabilities of the GPUs, with GPU threads concurrently processing events for different network components.

The network controller and simulation server cooperate to enable efficient network simulation at scale. The network controller performs initialization tasks including receiving the topology definition, deriving the GPU application, and transmitting the GPU application to the simulation server. Once the simulation server receives the GPU application and begins execution, the simulation proceeds on the GPUs with the simulation server processing events and advancing simulation time until a termination condition is satisfied. This division of responsibilities between the network controller and simulation server enables the system to minimize overhead during simulation execution while providing flexibility in specifying the network topology to be simulated.

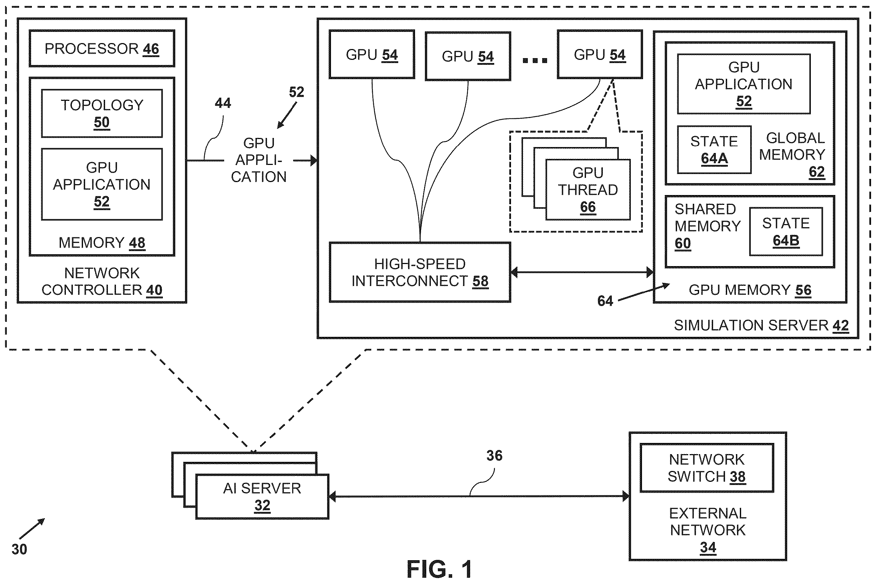

FIG. 1 illustrates a block diagram of a computing system 30 configured for GPU-assisted network simulation, in accordance with an embodiment of the present disclosure. Computing system 30 comprises an AI server 32 connected to a data network 34 via a network connection 36 through a network switch 38. Data network 34 represents an external network that AI server 32 communicates with during operation.

AI server 32 comprises a network controller 40 and a simulation server 42 connected via a communication path 44. Communication path 44 enables data transfer between network controller 40 and simulation server 42, including transmission of GPU applications and topology definitions. In some embodiments, communication path 44 comprises a Peripheral Component Interconnect Express (PCIe) bus that provides high-bandwidth communication between the components within AI server 32.

Network controller 40 comprises a controller processor 46 (i.e., a first processor) and a controller memory 48. Controller memory 48 stores a communication topology definition 50 and a GPU application 52. Communication topology definition 50 specifies the structure and interconnections of data network 34 to be simulated, including the arrangement of network components such as switches, network adapters, and links. Controller processor 46 receives communication topology definition 50 and derives GPU application 52 from the definition. GPU application 52 comprises executable code configured to simulate data network 34 according to the structure specified by communication topology definition 50.

Simulation server 42 comprises one or more GPUs 54 (i.e., second processors), a GPU memory 56, and a high-speed interconnect 58. GPU memory 56 comprises a shared memory 60 and a global memory 62. GPU memory stores a simulated network state 64 comprising a simulated network state 64A and a simulated network state 64B. Global memory 62 stores simulated network state 64A and GPU application 52, while shared memory 60 stores simulated network state 64B. Simulated network state 64A and simulated network state 64B collectively represent the state of the simulated data network during simulation execution, including the states of switches, network adapters, and links defined by communication topology definition 50.

With continued reference to FIG. 1, GPUs 54 execute GPU threads 66 to process GPU application 52 and simulate data network 34. GPU threads 66 perform the discrete event simulation logic specified by GPU application 52, processing timestamped events for the network components defined by communication topology definition 50. High-speed interconnect 58 facilitates communication between GPUs 54, enabling efficient data transfer during simulation execution when the simulated data network is partitioned across multiple GPUs.

In operation, controller processor 46 transmits GPU application 52 to simulation server 42 via communication path 44. Simulation server 42 receives GPU application 52 and stores the executable code in GPU memory 56 for execution by GPUs 54. Controller processor 46 may also transmit initial state data for the simulated network components, including switch states, NIC states, and link states, which simulation server 42 stores in global memory 62 and shared memory 60 according to the memory organization specified by GPU application 52. In some embodiments, controller processor 46 transmits configuration parameters along with GPU application 52, where the configuration parameters specify simulation settings such as traffic patterns, flow sizes, routing algorithms, and termination criteria. Simulation server 42 receives the configuration parameters and stores them in GPU memory 56 for access by GPU threads 66 during simulation execution. The configuration parameters may include a predefined simulation end time, an error threshold, or flow completion criteria that determine when the simulation terminates.

In some aspects, controller processor 46 derives GPU application 52 by analyzing communication topology definition 50 to determine the number and types of GPU kernels required for the simulation. Controller processor 46 generates kernel launch parameters including grid dimensions and block dimensions based on the number of components at each layer of the network hierarchy. For switch kernels, the thread block size may be set to the radix of the switches, while for NIC kernels and link kernels, the thread block size may be set to the warp size of GPU architecture 130. Controller processor 46 organizes the GPU kernels into a graphics-processing execution graph that defines the directed acyclic graph of kernel execution for the simulation.

In certain embodiments, controller processor 46 partitions the simulated data network across GPUs 54 when the network size exceeds the memory capacity of a single GPU. Controller processor 46 assigns network components to GPU partitions according to a partitioning strategy, such as a vertical split partitioning strategy where each GPU receives an equal number of switches of each type. Controller processor 46 identifies cross-partition links that connect components across different GPU partitions and allocates cross-GPU event queues in shared memory 60 for these links. The partitioning information is included in GPU application 52 so that simulation server 42 can properly route events between components during simulation execution.

Simulation server 42 receives GPU application 52 and executes the application using GPUs 54 to simulate data network 34. Simulation server 42 executes GPU application 52 without requiring run-time communication with controller processor 46 after an initial invocation, allowing the simulation to proceed entirely on GPUs 54 until a termination condition is satisfied. This architecture minimizes overhead during simulation execution by eliminating the latency associated with CPU-GPU communication during the simulation process.

In some embodiments, network controller 40 and simulation server 42 are separate physical computers connected by an Ethernet connection. In such configurations, network connection 36 provides the communication link between network controller 40 and simulation server 42, enabling the transmission of GPU application 52 and communication topology definition 50 across the network. This arrangement allows network controller 40 to be located remotely from simulation server 42, providing flexibility in system deployment.

In other embodiments, network controller 40 and simulation server 42 are contained within a single AI server 32. In such configurations, network controller 40 comprises a host CPU that functions as controller processor 46, and simulation server 42 comprises multiple GPUs 54 connected to the host CPU via a PCIe bus that functions as communication path 44. This arrangement provides low-latency communication between network controller 40 and simulation server 42 while consolidating the simulation system within a single physical server. For example, AI server 32 may comprise a DGX-H100 server containing a host CPU and eight GPUs interconnected via high-speed interconnect 58, with the host CPU functioning as network controller 40 and the eight GPUs functioning as simulation server 42.

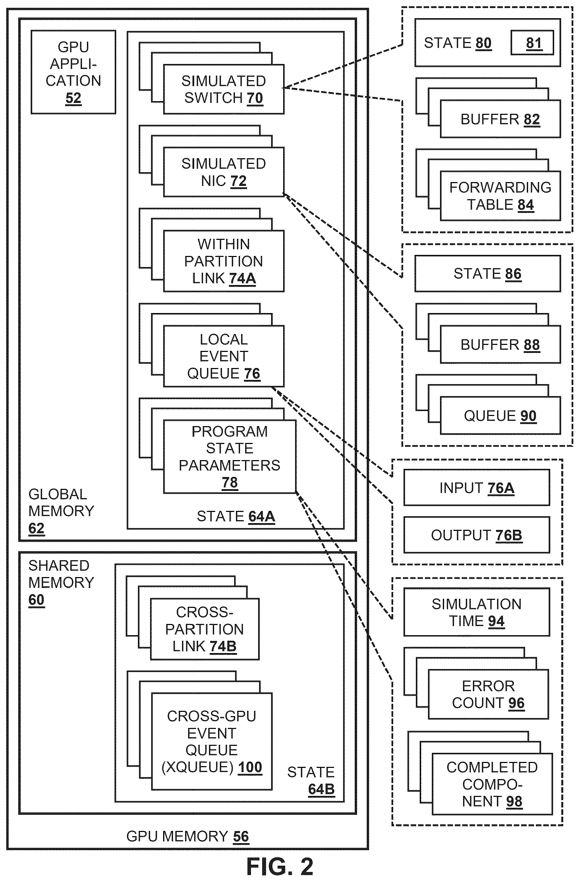

FIG. 2 illustrates a block diagram of GPU memory 56 for a network simulation system, in accordance with an embodiment of the present disclosure. GPU memory 56 comprises two principal memory regions: global memory 62 and shared memory 60. Global memory 62 stores simulated network state 64A associated with GPU application 52, while shared memory 60 stores state information for components that span GPU boundaries.

Global memory 62 stores the state of network components that reside within a single GPU partition. Within global memory 62, simulated network state 64A comprises a switch 70 and a simulated NIC (i.e., a network adapter) 72 representing the network elements defined by the communication topology. Switch 70 represents a simulated network switch that receives packets on input ports and forwards packets to output ports based on forwarding decisions. Simulated NIC 72 represents a simulated network interface card that generates and receives packets during simulation execution.

With continued reference to FIG. 2, global memory 62 stores a switch state 80 associated with switch 70. Switch state 80 comprises a priority queue 81, a switch buffer 82, and a forwarding table 84. Priority queue 81 organizes events from multiple ingress ports according to timestamp to enable selection of the event with the earliest timestamp for processing by forwarding logic. Switch buffer 82 stores packets that are queued within switch 70 awaiting processing or transmission. Forwarding table 84 contains routing information that forwarding logic consults to determine the appropriate egress port for each packet based on packet header information.

In embodiments herein, different types of local event queues 76 can be differentiated by appending a letter to the identifying numeral, so that the different types of the local event queues comprise input event queues 76A and output event queues 76B.

Global memory 62 further stores a NIC state 86 associated with simulated NIC 72. NIC state 86 comprises a NIC buffer 88 and a NIC queue 90. NIC buffer 88 stores packets that are awaiting transmission or have been received by simulated NIC 72. NIC queue 90 manages the ordering of packets for transmission from simulated NIC 72. NIC state 86 further comprises input queue 92A and output queue 92B for handling data flow into and out of simulated NIC 72 during simulation execution.

Global memory 62 also stores a within-partition link 74A that represents a communication connection between components residing on the same GPU partition. Within-partition link 74A transfers events between adjacent components such as between switch 70 and simulated NIC 72 when both components are assigned to the same GPU. A local event queue 76 is stored in global memory 62 for managing events locally within the simulation, providing input and output event queuing for components within the partition.

Global memory 62 stores program state parameters 78 that track the progress and status of the simulation. Program state parameters 78 comprise a simulation time 94 for tracking the current simulation time of each component, an error count 96 for recording simulation errors that occur during execution, and a completed component 98 for tracking which components have completed their simulation tasks. These program state parameters 78 are used to evaluate termination conditions and monitor simulation progress without requiring communication with the network controller during execution.

Shared memory 60 stores simulated network state 64A that comprises a cross-partition link 74B and a cross-GPU event queue 100. Cross-partition link 74B represents a communication connection between components that reside on different GPU partitions, enabling simulation of network links that span GPU boundaries. Cross-GPU event queue 100, also referred to as an Xqueue, facilitates event transfer between multiple GPUs by providing a queue accessible by GPUs on both sides of the partition boundary.

The organization of GPU memory 56 supports efficient network simulation by separating state that is accessed locally within a single GPU from state that is shared across multiple GPUs. Components within a partition access global memory 62 via standard read and write operations, while cross-GPU communication occurs through shared memory 60 via one-sided get and put operations over high-speed interconnect 58. This memory architecture enables transparent scaling of the simulation across multiple GPUs by allocating cross-GPU event queue 100 using a shared memory abstraction that allows GPUs to transfer events without requiring collective communication primitives or marshalling and demarshalling of data.

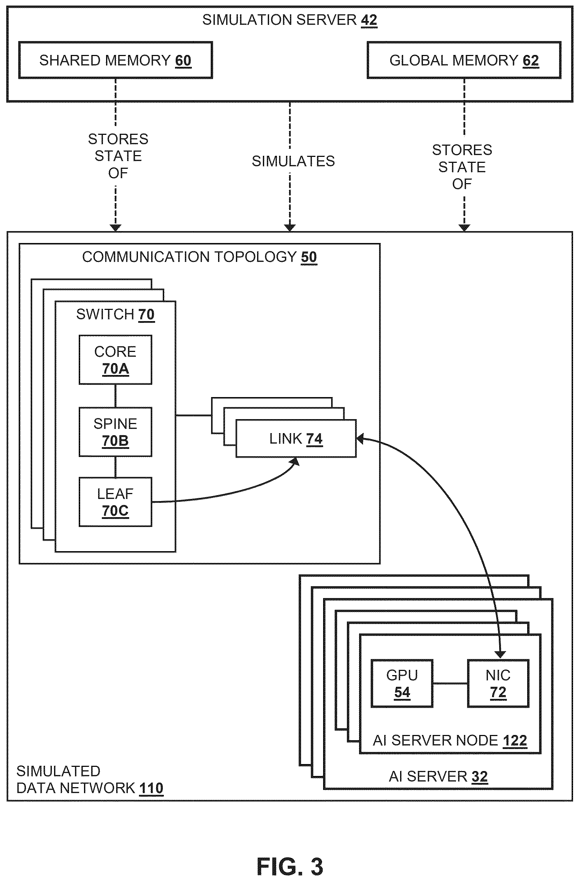

FIG. 3 illustrates a block diagram of a simulated data network 110 and its relationship to simulation server 42, in accordance with an embodiment of the present disclosure. Simulation server 42 comprises shared memory 60 and global memory 62, which store the state of simulated data network 110 during simulation execution. Simulation server 42 simulates simulated data network 110 according to communication topology definition 50, which specifies the structure and interconnections of the network components.

In embodiments herein, different types of switches 70 can be differentiated by appending a letter to the identifying numeral, so that the different types of the switches comprise core switches 70A, spine switches 70B, and leaf switches 70C.

Simulated data network 110 comprises a hierarchical arrangement of switches 70 organized in multiple layers. Switches 70 comprise core switches 70A at the top of the hierarchy, spine switches 70B at an intermediate level, and leaf switches 70C at the bottom level connecting to end devices. Core switches 70A connects to spine switches 70B, which in turn connect to leaf switches 70C. This hierarchical structure enables packets to traverse upward through the network hierarchy from a source device through leaf switches 70C, spine switches 70B, and core switches 70A, and then downward to a destination device.

Switches 70 are interconnected via links 74 that facilitate communication between different levels of the network hierarchy and between switches and network adapters. Links 74 connect core switch 70A to spine switches 70B, spine switches 70B to leaf switches 70C, and leaf switches 70C to NICs 72. Links 74 represent the physical or logical connections that transfer packets between adjacent network components during simulation execution.

With continued reference to FIG. 3, simulated data network 110 further comprises AI server 32 containing multiple AI server nodes 122. Each AI server node 122 comprises a GPU 54 and a NIC 72. NIC 72 provides the network interface that connects AI server node 122 to the network infrastructure, specifically to leaf switches 70C via links 74. This arrangement reflects the architecture of modem AI clusters where each GPU has its own dedicated network interface card for communication with other devices in the cluster.

Communication topology definition 50 defines the structure of simulated data network 110 as a fat-tree topology with multiple layers comprising core switches 70A, spine switches 70B, and leaf switches 70C. In a fat-tree topology, th-1e network provides multiple paths between any pair of end devices, with the number of uplinks from each switch layer equal to the number of downlinks, enabling non-blocking communication patterns. The hierarchical arrangement of switches 70 in the fat-tree topology allows packets to be routed through the network by traversing upward to a common ancestor switch and then downward to the destination.

In some embodiments, communication topology definition 50 defines simulated data network 110 as a leaf-spine topology with two levels of switches. In a leaf-spine topology, leaf switches 70C connect directly to spine switches 70B without an intervening core layer, and every leaf switch 70C connects to every spine switch 70B. This two-tier architecture provides predictable latency and simplified routing compared to deeper hierarchies, and is commonly deployed in modem data center networks.

Simulated data network 110 comprises AI server nodes 122 where each AI server node 122 has multiple GPUs 54, with each GPU 54 having its own NIC 72. This configuration reflects the architecture of AI servers such as DGX systems where multiple GPUs are housed within a single server chassis, with each GPU equipped with a dedicated network interface for high-bandwidth communication with other GPUs in the cluster. The simulation models this architecture by representing each GPU-NIC pair as an AI server node 122 that generates and receives network traffic during simulation execution.

The state of simulated data network 110 is distributed across shared memory 60 and global memory 62 of simulation server 42. Global memory 62 stores the state of switches 70, NICs 72, and within-partition links that reside on a single GPU partition. Shared memory 60 stores the state of cross-partition links that connect components across different GPU partitions, enabling simulation of network topologies that span multiple GPUs. This memory organization allows simulation server 42 to scale the simulation to large network topologies by partitioning simulated data network 110 across multiple GPUs while maintaining efficient communication between partitions through shared memory 60.

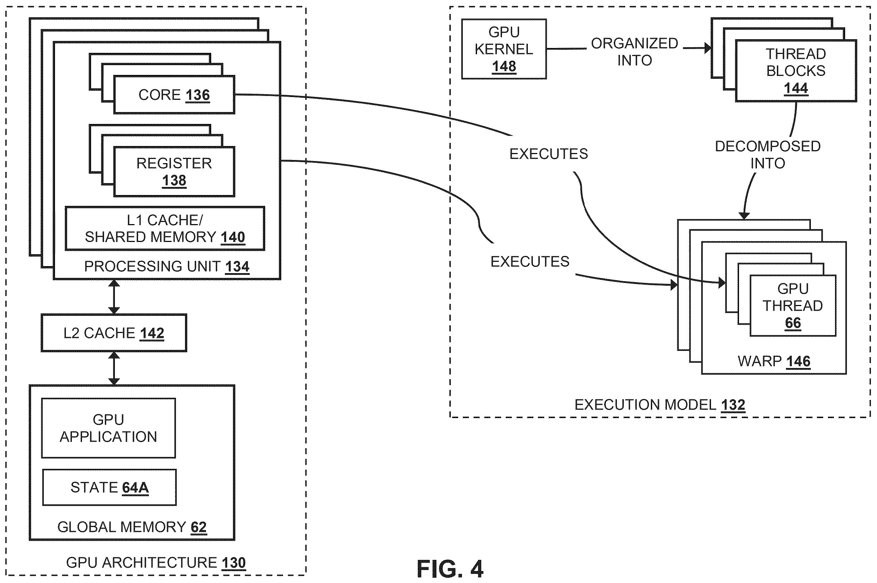

FIG. 4 illustrates a block diagram of a GPU architecture 130 and an associated execution model 132 in accordance with an embodiment of the present disclosure. GPU architecture 130 represents the hardware organization of GPUs 54 within simulation server 42, while execution model 132 represents the logical organization of GPU computation that GPU application 52 utilizes to perform network simulation.

GPU architecture 130 comprises multiple processing units 134, each containing computational resources for executing GPU threads 66. Each processing unit 134 comprises a core 136, a register 138, and an L1 cache/shared memory 140. Core 136 provides the arithmetic logic units that perform computational operations for GPU threads 66. Register 138 provides fast storage for thread-local variables and intermediate computation results. L1 cache/shared memory 140 provides fast memory access for threads within the same thread block, enabling efficient intra-block communication and data sharing. Processing units 134 correspond to streaming multiprocessors (SMs) that contain computation cores, register files, and thread schedulers for executing parallel workloads.

With continued reference to FIG. 4, GPU architecture 130 further comprises an L2 cache 142 and global memory 62 that are shared by all processing units 134. L2 cache 142 provides an intermediate level of caching between L1 cache/shared memory 140 and global memory 62, reducing the latency of memory accesses that miss in L1 cache/shared memory 140. Global memory 62 stores GPU application 52 and simulated network state 64A, providing persistent storage that is accessible by all GPU threads 66 across all processing units 134. The memory hierarchy comprising L1 cache/shared memory 140, L2 cache 142, and global memory 62 enables GPU architecture 130 to balance memory access latency with storage capacity for network simulation workloads.

Execution model 132 depicts the logical organization of GPU computation that GPU application 52 employs. A GPU kernel 148 represents executable code that is launched for execution on GPU architecture 130. GPU kernel 148 is organized into multiple thread blocks 144, which serve as organizational units that are assigned to processing units 134 for execution. Each thread block 144 comprises multiple GPU threads 66 that execute together and share data via L1 cache/shared memory 140 within the assigned processing unit 134.

Each thread block 144 is decomposed into multiple warps 146, where each warp 146 serves as a scheduling unit containing GPU threads 66. Each warp 146 contains 32 GPU threads 66 that execute in a single instruction multiple threads (SIMT) fashion. In the SIMT execution model, GPU threads 66 within a warp 146 follow a vectored execution pattern where threads execute the same instruction, potentially applying the instruction to different data. This execution model enables GPU architecture 130 to efficiently process parallel workloads by having multiple threads perform identical operations on different data elements simultaneously.

The hierarchical organization of execution model 132 enables GPU architecture 130 to efficiently execute network simulation workloads. GPU kernel 148 provides the unit of execution that is launched on GPU architecture 130 to process events for network components. Thread blocks 144 provide organizational units that group GPU threads 66 for assignment to processing units 134, enabling the simulation to leverage the parallel execution capabilities of multiple processing units 134. Warps 146 provide scheduling units that enable processing units 134 to execute groups of 32 GPU threads 66 in lockstep, maximizing utilization of the computational resources within each processing unit 134.

The SIMT execution model of GPU architecture 130 provides advantages for network simulation workloads where many network components share the same event handling logic. When GPU threads 66 within a warp 146 execute the same instructions on different data, such as processing events for different ingress queues of the same type, the threads execute efficiently without divergence. GPU application 52 organizes simulation logic to map homogeneous modules to GPU threads 66 within the same warp 146, ensuring that threads execute the same event handling code and thereby maximizing the performance of vectorized GPU compute.

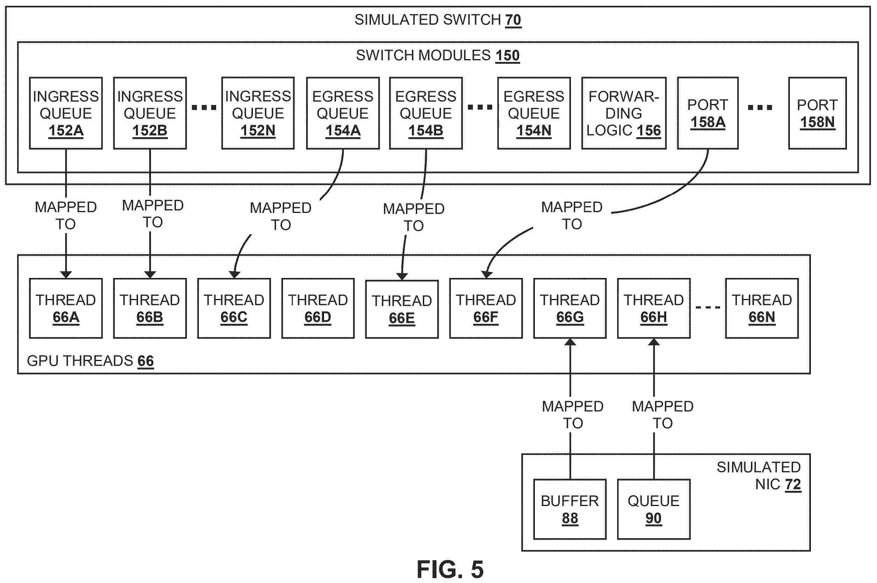

FIG. 5 illustrates a block diagram of a granular module decomposition architecture for GPU-based network simulation, in accordance with an embodiment of the present disclosure. The architecture depicts how simulated network components are decomposed into granular modules and mapped to individual GPU threads 66 for parallel execution. GPU application 52 decomposes each simulated switch into a plurality of granular switch modules, with each module being mapped to a respective GPU thread to maximize the performance of vectorized GPU compute and reduce thread divergence.

The upper portion of FIG. 5 shows switch 70 that is decomposed into a plurality of switch modules 150. Switch modules 150 comprise multiple ingress FIFO queues for receiving incoming events, multiple egress queues for outputting processed events, forwarding logic for routing decisions, and multiple ports for network connectivity. Specifically, switch modules 150 comprise ingress FIFO queues 152 for receiving incoming events from adjacent network components. In embodiments herein, ingress FIFO queues 152 can be differentiated by appending a letter to the identifying numeral, so that the ingress FIFO queues comprise ingress FIFO queues 152A - 154N.

Switch modules 150 further comprise egress queues for outputting processed events to downstream network components. In embodiments herein, local egress queues 154 can be differentiated by appending a letter to the identifying numeral, so that the egress queues comprise egress queues 154A - 154N.

Switch modules 150 also comprise a forwarding logic 156 that processes events dequeued from the ingress FIFO queues and determines the appropriate egress port for each packet based on forwarding decisions. Switch modules 150 additionally comprise ports 158 that provide network connectivity to adjacent components in the simulated data network.

In embodiments herein, ports 158 and GPU threads 66 can be differentiated by appending a letter to the identifying numeral, so that the ports comprise ports 158A-158N, and the GPU threads comprise ingress GPU threads 66A-66N.

With continued reference to FIG. 5, each switch module within switch 70 is mapped to a respective GPU thread from among GPU threads 66. Specifically, ingress FIFO queue 152A is mapped to GPU thread 66A and ingress FIFO queue 152B is mapped to GPU thread 66B. Egress queue 154A is mapped to a GPU thread 66D, and egress queue 154B is mapped to GPU thread 66E. Forwarding logic 156 is mapped to a GPU thread 66G. Port 158A is mapped to GPU thread 66H. This mapping enables each module to be executed on a single SIMT thread, maximizing the performance of vectorized GPU compute while reducing thread divergence by ensuring threads within a warp execute homogeneous logic for their assigned modules.

The lower portion of FIG. 5 shows simulated NIC 72 that is similarly decomposed into granular modules. Simulated NIC 72 comprises NIC buffer 88 and NIC queue 90 as the constituent modules. NIC buffer 88 stores packets that are awaiting transmission or have been received by simulated NIC 72. NIC queue 90 manages the ordering of packets for transmission from simulated NIC 72. NIC buffer 88 is mapped to GPU thread 66G, and NIC queue 90 is mapped to GPU thread 66H. GPU threads 66 collectively form a pool of GPU threads that execute the simulation logic for the decomposed modules of both switches and network adapters.

The granular module decomposition architecture enables GPU application 52 to leverage the parallel execution capabilities of GPU architecture 130 by assigning each module to an individual GPU thread. Each GPU thread handles a single link while each thread block handles a separate switch, with individual ports, ingress queues, and egress queues handled by single GPU threads within the thread block. This design enables the simulation to process events for many modules concurrently, with GPU threads within the same warp executing identical event handling logic on different data corresponding to their respective modules. The granular decomposition is more fine-grained than conventional network simulators, where a single thread typically handles an entire switch or network adapter, and this finer granularity enables the simulation to more fully utilize the parallel processing capabilities of GPUs 54.

In various embodiments, the modules described herein can be implemented as switch modules 150 (comprising ingress queues 152, egress queues 154, forwarding logic 156, and ports 158), NIC modules (comprising buffer 88 and queue 90), or link modules (comprising within-partition links 74A and cross-partition links 74B).

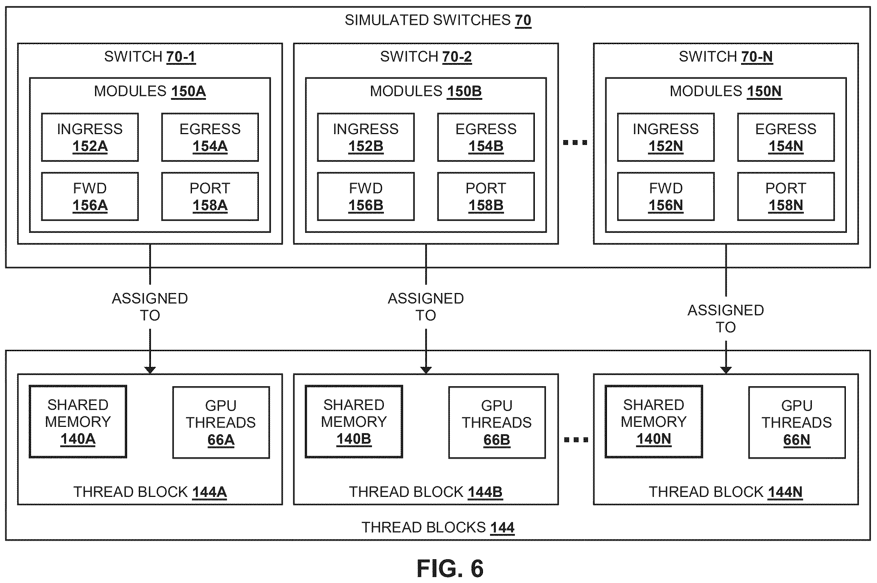

FIG. 6 illustrates a block diagram of thread block assignment for simulated switches in accordance with an embodiment of the present disclosure. In embodiments herein, switches 70 (any type) can be differentiated by appending a number to the identifying numeral, so that the different simulated switches comprise switches 70-1 - 70-N.

Additionally, in embodiments herein, different instances of switch modules 150, forwarding logic 156, thread blocks 144 and shared memory 140 can be differentiated by appending a number to the identifying numeral, so that the different instances of forwarding logic comprises forwarding logic 156A-156N, the thread blocks comprises thread blocks 144A-144N and the shared memory comprises shared memories 140A-140N.

The diagram shows how multiple simulated switches are each assigned to respective thread blocks for parallel execution on GPU architecture 130. Specifically, simulated switches 701- - 70-N are each assigned to thread block 144A, thread block 144B, and thread block 144N, respectively.

Each simulated switch 70 contains a set of switch modules that are mapped to GPU threads within the assigned thread block. Simulated switch 70-1 contains a switch module 150A, simulated switch 70-2 contains a switch module 150B, and simulated switch 70-N contains a switch module 150N. Within each simulated switch 70, the modules comprise ingress FIFO queue 152A - 152N for receiving incoming events, egress queues 154A - 154N for outgoing events, forwarding logic 156A - forwarding logic 156N for processing and routing decisions, and ports 158A - port 158N for network connectivity.

With continued reference to FIG. 6, thread blocks 144A - thread block 144N each comprise shared memory 140A - shared memory 140N, respectively, along with GPU threads 66A - 66N. Shared memories 140A - 140N within each thread block enable fast intra-switch synchronization between GPU threads processing different modules of the same switch. Each switch module within a simulated switch is mapped to a respective GPU thread, allowing the ingress queues, egress queues, forwarding logic, and ports to be processed in parallel within the thread block.

The assignment relationship between each simulated switch and its corresponding thread block enables efficient parallel simulation of multiple switches. Simulated switch 70-1 is assigned to thread block 144A, simulated switch 70-2 is assigned to thread block 144B, and simulated switch 70-N is assigned to thread block 144N. This architecture enables each thread block to handle the internal operations of a single switch while leveraging shared memory for rapid communication between GPU threads processing the various switch modules.

Simulation server 42 uses thread block shared memory for fast synchronization across threads operating on individual ports within a switch. When a switch determines which packet to process and forward, the switch computes the maximal timestamp of a packet that the switch can process by examining the lookahead values of the ingress queues. This computation requires a synchronization operation that would be expensive outside of a thread block. Within a thread block, GPU application 52 employs a *syncthreads()* synchronization primitive that leverages shared memory 140A, shared memory 140B, or shared memory 140N of the GPU to enable efficient coordination between GPU threads. The *syncthreads()* synchronization primitive causes all threads within the thread block to wait until all threads have reached the synchronization point, enabling coordinated access to shared data structures such as priority queue 81 that organizes events across incoming ports.

The thread block assignment architecture enables GPU application 52 to exploit the memory hierarchy of GPU architecture 130 for network simulation. Threads within the same thread block share access to L1 cache/shared memory 140, which provides faster access than global memory 62. By assigning all modules of a single switch to the same thread block, the simulation enables these modules to communicate through shared memory rather than through slower global memory accesses. This design is particularly advantageous for operations that involve communication between components within the switch, such as when forwarding logic 156A, forwarding logic 156B, or forwarding logic 156N retrieves events from ingress FIFO queues and determines the next event to process based on timestamp ordering.

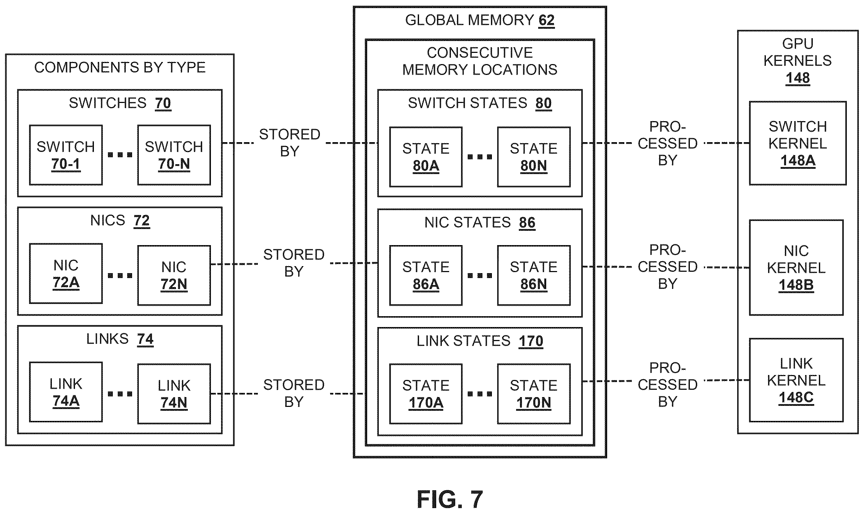

FIG. 7 illustrates a block diagram of a data-oriented memory layout for organizing components by type in global memory 62, in accordance with an embodiment of the present disclosure. The diagram shows how components of simulated data network 110 are organized in consecutive memory locations to optimize coalesced memory access by GPU kernels 148. Simulation server 42 partitions network state based on module assignment so that device states are colocated with their SIMT threads for coalesced memory access.

Embodiments herein, different instances of NICs 72, links 74, switch states 80, NIC states 86 and link states 170 can be differentiated by appending a number to the identifying numeral, so that the NICs comprises NICs 72A-N, the links comprise links 74A-N, the switch states comprise switch states 80A-80N, the NIC states comprises NIC states 86A-86N and the link states comprise link states 170A-170N.

On the left side of FIG. 7, components are grouped by type. A first group comprises switches 70, including simulated switches 70-1 - 70-N. A second group comprises NICs 72, including simulated NICs 72A - 72N. A third group comprises links 74, including links 74A - 74N.

In the center of FIG. 7, global memory 62 stores the states of these components in consecutive memory locations. Switch states 80 comprise a switch state 80A and a switch state 80N, which are stored by the corresponding switches 70. NIC states 86 comprise NIC states 86A - 86N, which are stored by the corresponding NICs 72. Link states 170 comprise a link states 170 - 170N, which are stored by the corresponding links 74.

On the right side of FIG. 7, GPU kernels 148 process the component states. A switch kernel processes switch states 80. A NIC kernel processes NIC states 86. A link kernel processes link states 170. This organization enables the same GPU kernel to fetch and process all components of the same type together, improving memory locality and reducing instruction divergence.

With continued reference to FIG. 7, the data-oriented layout ensures that fields of the same component type are stored together in consecutive memory locations within global memory 62. GPU application 52 organizes data structures using data-oriented layout where GPU threads 66 access large data structures through pointers to large continuous arrays. As a concrete example, each link has an event queue to track incoming events. Instead of statically allocating a fixed array queue at the same location in memory as the rest of the link, GPU application 52 preallocates a large array that contains the event queues for all links. When a GPU thread requires access to a particular event queue for a link, the GPU thread has access to the index of that event queue in the contiguous array.

The data-oriented memory layout provides two aspects of coalescing that GPU application 52 builds into the data layout. First, adjacent GPU threads 66 access memory blocks adjacent in memory. This arrangement ensures every warp 146 requests a small number of memory transactions, thereby reducing the total number of hardware transactions required to satisfy memory requests from GPU threads 66 within the warp. Second, since the queues are built as fixed arrays instead of as linked lists, each GPU thread accessing events from a queue issues a small number of transactions and is able to access all events in that queue.

The organization of network components in consecutive memory locations enables GPU kernels 148 to achieve coalesced memory access patterns. When GPU threads 66 within a warp 146 access contiguous memory locations, multiple memory requests are handled by a single hardware transaction, thereby reducing the number of hardware transactions and better utilizing the memory bandwidth of GPU architecture 130. GPU application 52 organizes switch state 80A through switch state 80N in consecutive memory locations so that GPU threads 66 processing different switches access adjacent memory addresses. Similarly, NIC state 86A through NIC state 86N are organized consecutively, and link state 170A through link state 170N are organized consecutively, enabling the respective GPU kernels to achieve coalesced memory access when processing components of each type.

The data-oriented memory layout provides better memory locality compared to object-oriented layouts where all fields of a single component are stored together. By organizing fields of the same component type together across all components, GPU application 52 enables GPU kernels 148 to fetch related data for multiple components in fewer memory transactions. This organization also allows GPU application 52 to design the threading model that executes the functionality of each component type together in a single kernel, minimizing instruction divergence by ensuring that GPU threads 66 within the same warp execute identical code paths on data stored in contiguous memory regions.

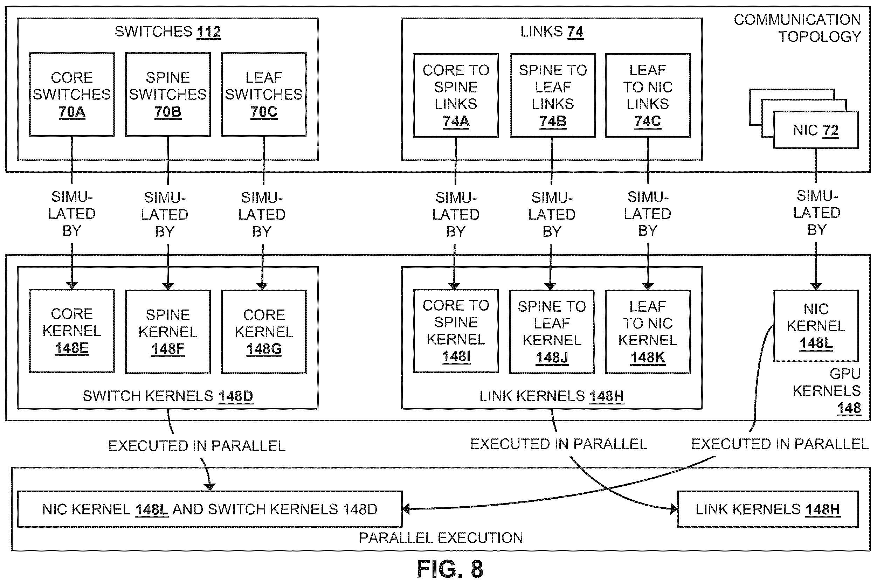

FIG. 8 illustrates a block diagram of a kernel assignment and parallel execution architecture for simulating a communication topology of a data network, in accordance with an embodiment of the present disclosure. The communication topology comprises switches 70, links 74, and NICs 72, each of which is simulated by corresponding GPU kernels 148. GPU application 52 assigns separate GPU kernels to different types of network components and different layers of the network hierarchy, enabling parallel execution of simulation logic across the simulated data network.

In embodiments herein, different types of switches GPU kernels 148 can be differentiated by appending a letter to the identifying numeral, so that the different types of the GPU kernels comprise core kernels 148E, spine kernels 148F, core kernels 148G, core to spine kernels 148I, spine to leaf kernels 148J, leaf to NIC kernels 148K and NIC kernels 148L.

Switches 70 are organized into multiple layers comprising core switches 70A, spine switches 70B, and leaf switches 70C. Each layer of switches is simulated by a respective switch kernel 148D. Switch kernels 148D comprise a core kernel 148E that simulates core switches 70A, a spine kernel 148F that simulates spine switches 70B, and a leaf kernel 148G that simulates leaf switches 70C. This assignment of separate GPU kernels to each switch layer enables GPU application 52 to process events for switches at different levels of the network hierarchy using dedicated kernels optimized for each layer.

With continued reference to FIG. 8, links 74 interconnect the various components of the communication topology and comprise within-partition link 74A connecting core switches to spine switches, cross-partition link 74B connecting spine switches to leaf switches, and a leaf to NIC link 74C connecting leaf switches to NICs. Links 74 are categorized as within-partition links or cross-partition links depending on whether the links connect components within the same GPU partition or across different GPU partitions. Each type of link is simulated by a respective link kernel within link kernels 148H. Link kernels 148H comprise a core to spine link kernel 148I that simulates links between core switches 70A and spine switches 70B, a spine to leaf link kernel 148J that simulates links between spine switches 70B and leaf switches 70C, and a leaf to NIC link kernel 148K that simulates links between leaf switches 70C and NICs 72.

NIC 72 represents network interface controllers that connect to leaf switches 70C via leaf to NIC link 74C. A NIC kernel 148L simulates all NICs 72 in the simulated data network. GPU application 52 assigns a single NIC kernel 148L to simulate all network adapters defined by the communication topology, enabling GPU threads 66 within NIC kernel 148L to process events for different NICs concurrently using the same event handling logic.

The architecture enables parallel execution of GPU kernels 148. NIC kernel 148L and switch kernels 148D execute in parallel with each other, and link kernels 148H also execute in parallel. This parallel execution structure allows simulation server 42 to process events from distinct components that do not interfere with each other concurrently, thereby maximizing utilization of the GPU compute resources and improving simulation throughput. Since NICs and switches are connected through links, when a particular NIC or switch processes events and sends the events to output queues, those output queues are input queues to links. No other NIC or switch processes these events until the next iteration in the simulation when the links pass the events to downstream components.

GPU application 52 parallelizes kernel execution to enable greater parallelism in the simulation. By containing many individual components including NICs, links, and switches in a single kernel, GPU architecture 130 makes efficient decisions on how to assign work to the many cores within processing units 134. By ensuring several kernels run in parallel, GPU architecture 130 processes events from distinct components that do not interfere with each other concurrently. The alternative approach of processing NICs first, then each of the link types, and then each of the switch types would be more sequential and restrict the ability of GPU architecture 130 to fully utilize GPU cores to process work. The parallel kernel execution architecture enables simulation server 42 to more fully saturate GPU compute units and achieve higher simulation throughput compared to sequential kernel execution approaches.

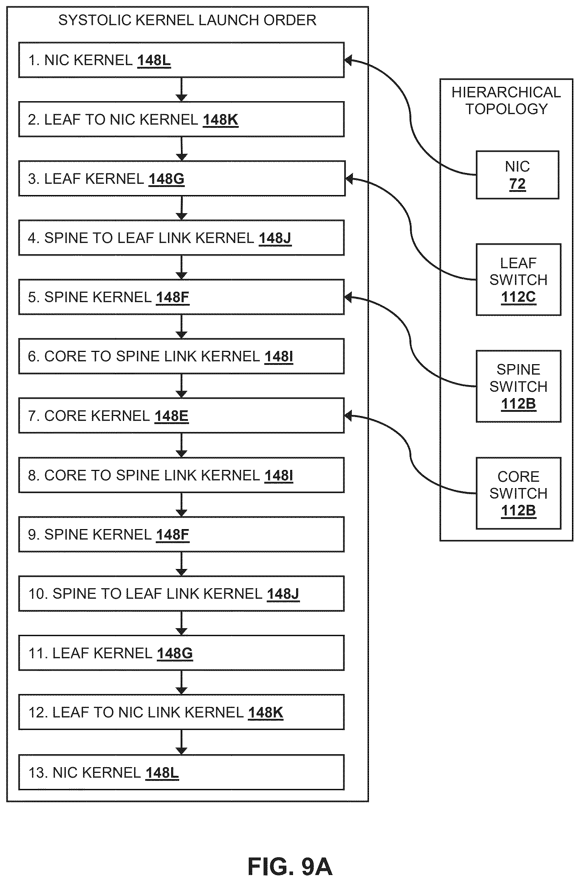

FIG. 9A illustrates a flowchart depicting a systolic kernel launch order for simulating a data network in accordance with an embodiment of the present disclosure. The flowchart shows the sequential execution of GPU kernels based on the hierarchical topology of the network, with the corresponding hierarchical topology shown on the right side of the figure comprising a NIC, a leaf switch, a spine switch, and a core switch. Computing system 30 launches GPU kernels in a systolic execution workflow based on topological locations of the components, wherein NICs, links, and switches are launched sequentially based on a hierarchical structure of the communication topology.

The systolic kernel launch order reflects the observation that datacenter network topologies are hierarchical. In the absence of misconfigurations, a packet's trajectory through the network is linear and follows a highly regular lifecycle. Packets are generated by a source NIC, transmitted upward through the network hierarchy, and then transmitted downward to a destination NIC. Switches do not produce packets on their own but rather forward packets received from adjacent components. This regular structure enables a systolic execution workflow where GPU application 52 launches NICs, links, and switches based on their topological locations sequentially for each simulation round.

With continued reference to FIG. 9A, the process begins with stage 1, where NIC kernel 148L is launched to process events at the network adapter level. NIC kernel 148L handles event processing for all NICs in the simulated data network, generating packets that are transmitted into the network. The process then proceeds to stage 2, where leaf to NIC link kernel 148K is executed to handle events on links between leaf switches and NICs. Leaf to NIC link kernel 148K transfers events from NICs to leaf switches, moving packets upward in the network hierarchy.

Stage 3 involves launching leaf kernel 148G to process events at the leaf switch layer. Leaf kernel 148G processes packets received from NICs via the leaf to NIC links and determines forwarding decisions for packets destined for higher levels of the network hierarchy. The process continues to stage 4, where spine to leaf link kernel 148J is executed to handle events on links between spine switches and leaf switches. Spine to leaf link kernel 148J transfers events from leaf switches to spine switches, continuing the upward movement of packets through the network.

Stage 5 involves launching spine kernel 148F to process events at the spine switch layer. Spine kernel 148F processes packets received from leaf switches and forwards packets toward the core layer of the network. Stage 6 executes core to spine link kernel 148I to handle events on links between core switches and spine switches. Core to spine link kernel 148I transfers events from spine switches to core switches, completing the upward path of packet transmission.

At stage 7, core kernel 148E is launched to process events at the core switch layer, representing the highest level of the network hierarchy. Core kernel 148E processes packets that have traversed upward through the network and determines forwarding decisions for the downward path toward destination NICs. The process then reverses direction for the downward path of packet transmission through the network hierarchy.

Stage 8 again executes core to spine link kernel 148I for the return path, transferring events from core switches to spine switches on the downward trajectory. Stage 9 launches spine kernel 148F for processing at the spine layer on the downward path, handling packets that are moving toward their destination leaf switches. Stage 10 executes spine to leaf link kernel 148J for the downward link processing, transferring events from spine switches to leaf switches.

Stage 11 launches leaf kernel 148G for the leaf switch layer on the return path, processing packets that are approaching their destination NICs. Stage 12 executes leaf to NIC link kernel 148K for the final link segment, transferring events from leaf switches to destination NICs. The process concludes at stage 13 with NIC kernel 148L processing events at the destination network adapter, completing the packet delivery.

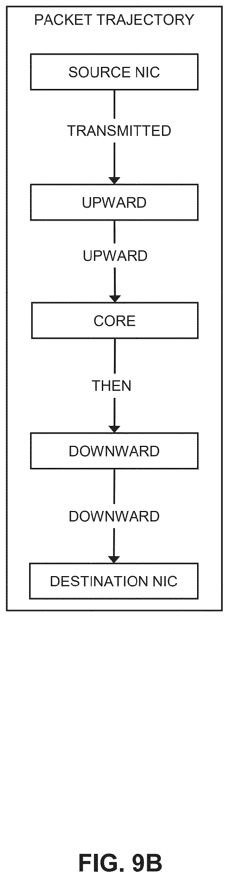

FIG. 9B illustrates a flowchart depicting a packet trajectory through a simulated data network. The flowchart represents the lifecycle of a packet as the packet traverses the network hierarchy from source to destination, corresponding to the kernel launch order depicted in FIG. 9A.

The packet trajectory begins at a source NIC, which represents the network interface card that generates and initiates transmission of the packet. From the source NIC, the packet is transmitted to the next stage in the network, entering the leaf switch layer. The packet then proceeds through an upward phase, moving toward higher levels of the network hierarchy through the spine switch layer.

The upward movement continues through another upward stage until the packet reaches the core of the network, which represents the highest level in the network topology. At the core, the packet has reached the apex of its trajectory and transitions to the downward phase of transmission toward the destination.

After passing through the core, the packet trajectory transitions to a downward phase. The packet moves downward through the network hierarchy via the spine switch layer, continuing through another downward stage via the leaf switch layer as the packet approaches its final destination. The packet trajectory concludes at a destination NIC, where the packet is received by the intended recipient network interface card.

The systolic kernel launch order and packet trajectory illustrate the regular and predictable nature of packet movement through hierarchical datacenter network topologies. The linear progression from source NIC through upward stages to the core and then through downward stages to the destination NIC reflects the systolic execution workflow employed in the simulation. This predictable trajectory enables efficient kernel launch ordering based on topological locations of network components during simulation execution. Since a kernel fetches its device state for execution, the systolic launch order enables GPU application 52 to optimize data access patterns by ensuring that device states are accessed in a predictable sequence that aligns with the hierarchical structure of the communication topology.

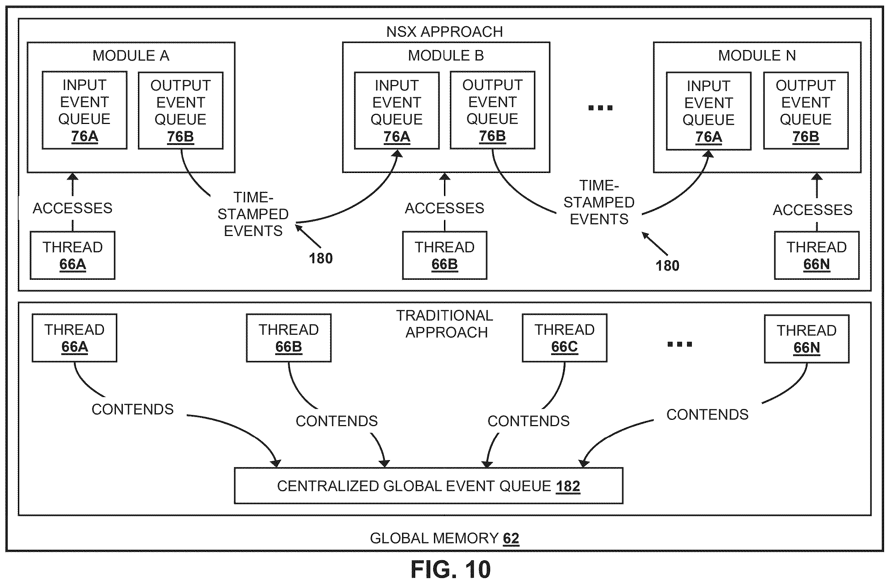

FIG. 10 illustrates a block diagram comparing two approaches for event queue management in a network simulation system. The diagram is divided into two sections: an NSX approach shown in the upper portion and a traditional approach shown in the lower portion. The comparison demonstrates how the distributed queue architecture of the NSX approach reduces thread contention compared to the centralized queue architecture of the traditional approach.

In the NSX approach, the system comprises multiple modules, including Modules A - N. Each module contains a given input event queue 76A and given output event queue 76B. Module A is accessed by GPU thread 66A, Module B is accessed by GPU thread 66B, and Module N is accessed by GPU thread 66N. A timestamped event 180 is transferred between adjacent modules, flowing from output event queue 76B of one module to input event queue 76A of an adjacent module. This architecture distributes event queues locally to each module, reducing the number of threads that contend on each queue.

With continued reference to FIG. 10, input event queue 76A and output event queue 76B are module-local event queues that reduce thread contention compared to a centralized global event queue by limiting the number of threads that contend on each event queue. By creating input event queue 76A and output event queue 76B for each module, GPU application 52 reduces the number of GPU threads 66 contending on any single queue. Each module operates on its own independent queues, so GPU threads 66 processing different modules do not compete for access to a shared queue resource. This design eliminates performance degradation due to thread contention that would otherwise occur when many GPU threads 66 concurrently attempt to access the same queue.

In the traditional approach shown in the lower portion of FIG. 10, GPU threads 66A - 66N all contend for access to a centralized global event queue 182 located in global memory 62. Each GPU thread competes with other GPU threads to access the single shared queue, which leads to high contention when many threads concurrently attempt to access the same resource. Centralized global event queue 182 stores all events sorted by timestamps, and GPU threads 66 pull elements from centralized global event queue 182 one by one to process events in timestamp order.

The centralized global event queue approach presents a severe bottleneck on GPU platforms. In CPU-based solutions with a more limited number of threads, pulling elements from a global queue one by one does not present a significant bottleneck. However, GPU architecture 130 has two orders of magnitude more threads than CPU platforms, and the contention for centralized global event queue 182 becomes a severe performance limitation. When many GPU threads 66 concurrently access centralized global event queue 182, the threads serialize their access to the shared resource, negating the parallel processing advantages of GPU architecture 130.

The NSX approach addresses the contention problem inherent in the traditional approach by providing module-local event queues. Timestamped events 180 are passed between modules through their respective output event queue 76B and input event queue 76A, enabling parallel processing while maintaining event ordering through timestamps. This distributed queue architecture collectively emulates the behavior of centralized global event queue 182 while avoiding the performance degradation associated with high thread contention on GPU platforms.

The module-local event queue design enables GPU application 52 to more effectively use available memory on GPU architecture 130. In the centralized global event queue design, centralized global event queue 182 uses more memory to hold more events in the case of larger simulations, but this additional memory provides marginal returns in performance because the queue access remains serialized. In the distributed queue architecture, additional memory is allocated for new queues as the simulation scales, and each queue is accessed by a limited number of GPU threads 66, enabling the simulation to scale more efficiently with increasing network size.

The distributed queue architecture also enables simulation server 42 to assign simulation modules based on the thread and memory hierarchy of GPU architecture 130. Since GPU application 52 assigns simulation modules based on the thread and memory hierarchy, module-local event queues provide an additional benefit: GPU threads 66 typically move events to other GPU threads that are close together in the memory hierarchy. This locality reduces the latency of event transfers between modules and enables more efficient utilization of the memory bandwidth provided by GPU architecture 130.

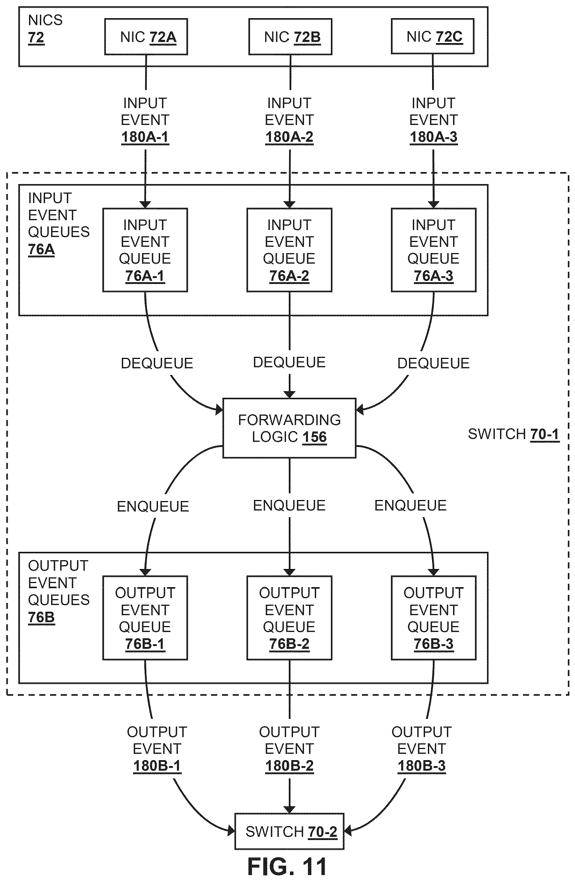

FIG. 11 illustrates a block diagram of an event queue architecture for a component of a simulated data network. In the example shown in FIG. 11, switch 70-1 is the component, with adjacent simulated NICs 72A, 72B, and 72C as sources of input events and adjacent simulated switch 70-2 as a destination for output events. The event queue architecture shown in FIG. 11 applies to any component of the data network, including network adapters, switches, and links, as defined by communication topology definition 50. GPU application 52 implements a discrete event simulation where network components such as switches, NICs, and links communicate by exchanging timestamped events that are produced and processed in timestamp order.

In embodiments herein, different types of input events 180 can be differentiated by appending a number to the identifying numeral, so that the different types of the events comprise input events 180A and output events 180B
Additionally, different instances of input event queues 76A, output event queues 76B, input events 180A and output events 180B can be differentiated by appending a number to the identifying numeral, so that the input event queues comprise input event queues 76A-1 - 76A-N, the output event queues comprises output event queues 76B-1 - 76B-N, the input events comprise input events 180A-1 - 180 A-N, and the output events comprise output events 180B-1 - 180B-N.

Switch 70-1 comprises input event queue 76A and output event queue 76B. Input event queue 76A comprises a first input event queue 76A-1, a second input event queue 76A-2, and a third input event queue 76A-3. First input event queue 76A-1 receives incoming events from simulated NIC 72A, second input event queue 76A-2 receives incoming events from simulated NIC 72B, and third input event queue 76A-3 receives incoming events from simulated NIC 72C. Specifically, first input event queue 76A-1 receives first input event 180A-1 from simulated NIC 72A, second input event queue 76A-2 receives second input event 180A-2 from simulated NIC 72B, and third input event queue 76A-3 receives third input event 180A-3 from simulated NIC 72C. Input event queue 76A queues input events to be processed by switch 70-1.

With continued reference to FIG. 11, switch 70-1 comprises forwarding logic 156 that receives events dequeued from input event queue 76A. Forwarding logic 156 dequeues first input event 180A-1 from first input event queue 76A-1, second input event 180A-2 from second input event queue 76A-2, and third input event 180A-3 from third input event queue 76A-3 for processing. Forwarding logic 156 processes the dequeued events by examining packet headers and consulting forwarding table 84 to determine the appropriate egress port for each packet based on forwarding decisions.

Forwarding logic 156 generates output events that are enqueued to output event queue 76B. Output event queue 76B comprises a first output event queue 76B-1, a second output event queue 76B-2, and a third output event queue 76B-3. Forwarding logic 156 generates a first output event 180B-1 that is enqueued to first output event queue 76B-1, a second output event 180B-2 that is enqueued to second output event queue 76B-2, and a third output event 180B-3 that is enqueued to third output event queue 76B-3. Output event queue 76B queues output events generated by switch 70-1 for transmission to downstream components.

First output event queue 76B-1, second output event queue 76B-2, and third output event queue 76B-3 output first output event 180B-1, second output event 180B-2, and third output event 180B-3, respectively, to simulated switch 70-2. Simulated switch 70-2 receives the output events from switch 70-1 via the respective output event queues and processes the received events according to the discrete event simulation logic implemented by GPU application 52.

The event queue architecture provides a producer-consumer abstraction where simulated NICs 72A, 72B, and 72C act as producers that enqueue events to input event queue 76A, and simulated switch 70-2 acts as a consumer that receives events from output event queue 76B. This module-local event queue design reduces contention compared to centralized global event queue 182 by limiting the number of GPU threads 66 that contend on each event queue. The architecture enables switch 70-1 to receive input events from multiple sources via separate input event queues and transmit output events to multiple destinations via separate output event queues, supporting the parallel processing of events across the simulated data network.

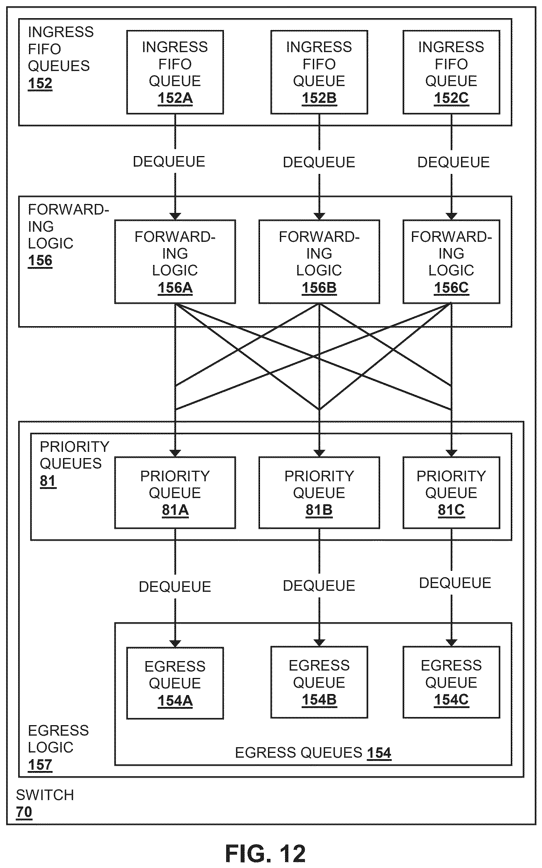

FIG. 12 illustrates a block diagram of a switch internal queue design within switch 70, in accordance with an embodiment of the present disclosure. The switch internal queue design employs a flex queue architecture that combines FIFO queues 152 as main backing stores with priority queues 81 as intermediate data structures for high fan-in scenarios. Switch 70 comprises ingress FIFO queues 152, forwarding logic 156, priority queues 81, and egress logic 157. Egress logic 157 comprises egress queues 154.

Ingress FIFO queues 152 comprise ingress FIFO queue 152A, ingress FIFO queue 152B, and ingress FIFO queue 152C. Each of ingress FIFO queue 152A, ingress FIFO queue 152B, and ingress FIFO queue 152C receives events from respective incoming ports of switch 70. Ingress FIFO queue 152A, ingress FIFO queue 152B, and ingress FIFO queue 152C serve as the main backing stores for incoming events, storing events in the order in which the events are received at each respective port. The FIFO queue discipline ensures that events at each of the ingress ports are maintained in arrival order, with the earliest received event positioned at the head of each of the respective ingress FIFO queues.

With continued reference to FIG. 12, forwarding logic 156 comprises forwarding logic 156A, forwarding logic 156B, and forwarding logic 156C. Forwarding logic 156A dequeues events from ingress FIFO queue 152A, forwarding logic 156B dequeues events from ingress FIFO queue 152B, and forwarding logic 156C dequeues events from ingress FIFO queue 152C. Each forwarding logic module processes the dequeued events by examining packet headers and consulting forwarding table 84 to determine the appropriate egress port for each packet.

Forwarding logic 156A, forwarding logic 156B, and forwarding logic 156C insert processed events into priority queues 81. In Fig. 12, priority queues 81 can be differentiated by appending a letter to the identifying numeral, so that the priority queues comprise priority queues 81A-81C,
Each forwarding logic module inserts events into the priority queue corresponding to the egress port determined by the forwarding decision. Specifically, forwarding logic 156A, forwarding logic 156B, and forwarding logic 156C each insert events into priority queue 81A, priority queue 81B, or priority queue 81C based on the destination egress port for each packet. Priority queues 81 serve as intermediate data structures for the high fan-in scenario where multiple forwarding logic modules, each executed by a separate GPU thread 66, enqueue events destined for the same egress queue 154.

Each priority queue 81 organizes events from the multiple forwarding logic modules according to their respective timestamps. Priority queue 81A organizes events destined for egress queue 154A, priority queue 81B organizes events destined for egress queue 154B, and priority queue 81C organizes events destined for egress queue 154C. Dequeuing from the head of each priority queue 81 returns the event with the smallest timestamp among all events currently in that priority queue, enabling egress logic 157 to retrieve events in timestamp order for each egress port without requiring a scan across all forwarding logic modules during each event retrieval operation.

Egress logic 157 comprises egress queues 154. Egress queues 154 comprise egress queue 154A, egress queue 154B, and egress queue 154C, which correspond to respective outgoing ports (not shown) of switch 70. Egress queue 154A dequeues events from priority queue 81A, egress queue 154B dequeues events from priority queue 81B, and egress queue 154C dequeues events from priority queue 81C. Egress queue 154A, egress queue 154B, and egress queue 154C store output events awaiting transmission to downstream network components connected to the respective outgoing ports.

The flex queue design strategically inserts priority queues 81 as intermediate data structures for high fan-in scenarios. In the simulation, high fan-in scenarios occur at egress logic 157, where multiple forwarding logic modules 156A, 156B, and 156C, each executed by a separate GPU thread 66, insert events destined for the same egress queue 154. Simulation server 42 uses FIFO queues as the main backing store for each ingress FIFO queue 152 but strategically inserts priority queues 81 as intermediate data structures for high fan-in components depending on module fan-in and network topology. When using priority queues 81, the sorting operation occurs once per iteration when switch 70 starts processing events, and egress logic 157 retrieves subsequent events by dequeuing from the head of each priority queue without requiring additional scans across the forwarding logic modules.

The flex queue architecture provides performance advantages compared to alternative synchronization approaches. GPU application 52 can employs the fle queue design because the sorting operation that populates priority queues 81 occurs once per iteration when the switches start processing events. An alternative approach using *syncthreads()* synchronization would require a reduction operation to determine the next event every time egress logic 157 needs to retrieve a new event for processing. At sufficient scale, the *syncthreads()* approach causes performance degradation as the number of forwarding logic modules to reduce over and the number of viable events per switch increases. The flex queue design reduces this overhead by performing a single insertion operation at the beginning of each iteration, after which egress logic 157 retrieves events from priority queues 81 without additional synchronization overhead.

The combination of FIFO queues 152 and priority queues 81 collectively emulates the behavior of a centralized global priority queue while avoiding the contention associated with use of a centralized global priority queue. Ingress FIFO queue 152A, ingress FIFO queue 152B, and ingress FIFO queue 152C maintain events in arrival order at each respective port, providing linear data structures that are easier to maintain on GPU architecture 130 compared to pointer-based priority queue structures. For high fan-in components where multiple producer modules enqueue events to a single consumer module, priority queues 81A, 81B, and 81C serve as intermediate data structures that aggregate events from the multiple forwarding logic modules for efficient retrieval by egress logic 157, enabling switch 70 to process events in timestamp order without requiring GPU threads 66 to contend for access to a single centralized queue.

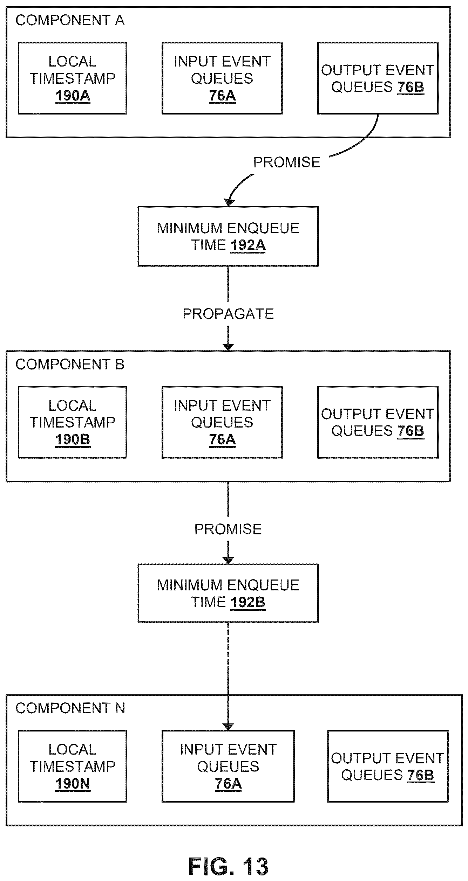

FIG. 13 illustrates a block diagram of a decentralized minimum enqueue time propagation system for preserving event causality in a network simulation. The system comprises multiple components, shown as Components A - N, each maintaining respective local timestamps and event queues for processing timestamped events. Computing system 30 preserves event causality using a decentralized synchronization algorithm in which each component maintains a respective local timestamp and computes a respective minimum enqueue time across its respective input event queues, processes events having timestamps less than or equal to its respective minimum enqueue time, and propagates a respective minimum enqueue time promise to its respective output event queues based on the component's local timestamp and a propagation delay to an adjacent component.

Component A comprises a local timestamp 190A, input event queue 76A, and output event queue 76B. Local timestamp 190A tracks the current simulation time for Component A, indicating the timestamp up to which Component A has processed events. Component A computes a minimum enqueue time 192A based on local timestamp 190A and a propagation delay to an adjacent component. Minimum enqueue time 192A represents a promise that indicates the earliest timestamp at which a future event may appear in output event queue 76B of Component A. The propagation delay corresponds to the time required for an event to travel from Component A to the adjacent downstream component.

With continued reference to FIG. 13, minimum enqueue time 192A is propagated from Component A to Component B via output event queue 76B of Component A. Component B comprises a local timestamp 190B, input event queue 76A, and output event queue 76B. Component B receives the minimum enqueue time promise from Component A and uses this information along with local timestamp 190B to determine which events are safe to process. Component B computes the minimum enqueue time across its input event queues 76A by examining the minimum enqueue time promises received from all upstream components that provide events to Component B.

Component B processes events from input event queue 76A that have timestamps less than or equal to the computed minimum enqueue time. By processing events with timestamps up to the minimum enqueue time, Component B maintains event causality because no events with earlier timestamps will arrive from upstream components. After processing events, Component B computes a minimum enqueue time 192B based on local timestamp 190B and the propagation delay to the next adjacent component. Minimum enqueue time 192B is then propagated from Component B toward Component N via output event queue 76B of Component B.

Component N comprises a local timestamp 190N, input event queue 76A, and output event queue 76B. The propagation of minimum enqueue time promises continues through the chain of components, with each component computing and propagating its respective minimum enqueue time to downstream components. Each component in the chain independently determines which events are safe to process based on the minimum enqueue time promises received from upstream components, without requiring topology-wide coordination across all components in simulated data network 110.

The decentralized synchronization algorithm is a variant of the null message algorithm that avoids sending timestamp messages by assigning a minimum enqueue time accessible to all modules in shared memory 60. Rather than transmitting explicit null messages between components to communicate timestamp information, GPU application 52 stores minimum enqueue time 192A and minimum enqueue time 192B in memory locations accessible to the relevant modules. Each module reads the minimum enqueue time from its input event queues 76A and writes its computed minimum enqueue time promise to its output event queues 76B, enabling synchronization through shared memory access rather than message passing.

Each module uses its own lookahead value based on propagation delay to adjacent components, allowing different modules to use different lookahead values rather than being forced to use the most conservative value. The lookahead value for a module corresponds to the propagation delay between the module and its adjacent downstream component. For modules within a switch where intra-switch propagation delay is on the order of nanoseconds, the lookahead value is relatively large, enabling aggressive event processing. For modules that communicate across switches where inter-switch propagation delay is on the order of microseconds, the lookahead value is more conservative. This decentralized approach enables each module to maximize the number of events that the module can safely process in each iteration while maintaining correctness of the simulation.

The decentralized minimum enqueue time propagation system enables simulation server 42 to process events for many components in parallel without requiring global synchronization across simulated data network 110. Each component independently computes its minimum enqueue time based on local state and the minimum enqueue time promises received from adjacent upstream components. This local computation avoids the contention that would result from a centralized scheduler that determines safe processing boundaries for all components. By allowing each component to operate independently based on local information, GPU application 52 fully leverages the parallelism of GPU architecture 130 that would otherwise be slowed down by false dependencies between components introduced by global synchronization algorithms.

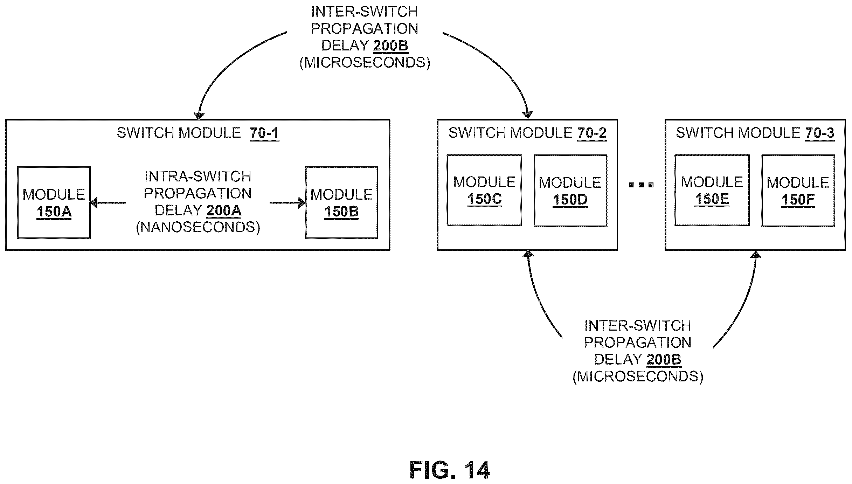

FIG. 14 illustrates a block diagram depicting mixed timescales and lookahead values across multiple switch modules in accordance with an embodiment of the present disclosure. In embodiments herein, different instances of the modules can be differentiated by appending a letter to the identifying numeral, so that the modules comprise modules A-F.

Fig. 14 shows simulated switches 70-1 - 70-N, , arranged to demonstrate the different propagation delays that exist within and between switches in simulated data network 110. The mixed timescales enable computing system 30 to synchronize among events at a granularity coarser than a clock tick of the communication network by processing events within a lookahead window during each iteration.

Simulated switch 70-1 contains switch module 150A and switch module 150B. Switch module 150A and switch module 150B represent granular functional units within simulated switch 70-1 that are mapped to individual GPU threads 66 for execution. Between switch module 150A and switch module 150B, an intra-switch propagation delay 200A is indicated. Intra-switch propagation delay 200A operates on the order of nanoseconds, representing the time required for an event to travel between modules within the same switch. The relatively short duration of intra-switch propagation delay 200A allows for aggressive lookahead values when processing events within a single switch, enabling switch module 150A and switch module 150B to process a larger number of events in each iteration.

With continued reference to FIG. 14, simulated switch 70-2 contains a switch module 150C and a switch module 150D. Simulated switch 70-N contains a switch module 150E and a switch module 150F. The ellipsis between simulated switch 70-2 and simulated switch 70-N indicates that additional switch modules are present in simulated data network 110.

Between simulated switch 70-1 and simulated switch 70-2, an inter-switch propagation delay 200B is shown. Inter-switch propagation delay 200B operates on the order of microseconds, representing the time required for an event to travel between switches across the network. Similarly, inter-switch propagation delay 200B exists between simulated switch 70-2 and simulated switch 70-N. Inter-switch propagation delay 200B is significantly longer than intra-switch propagation delay 200A, requiring more conservative lookahead values for event processing between switches. The conservative lookahead values associated with inter-switch propagation delay 200B limit the number of events that modules can safely process when communicating across switch boundaries.

The decentralized synchronization algorithm enables each module to use its own lookahead value based on the propagation delay to an adjacent component. Switch module 150A uses a lookahead value based on intra-switch propagation delay 200A when computing minimum enqueue time promises for output event queues connected to switch module 150B within simulated switch 70-1. Switch module 150B uses a lookahead value based on inter-switch propagation delay 200B when computing minimum enqueue time promises for output event queues connected to switch module 150C in simulated switch 70-2. This decentralized approach avoids the limitation of a central scheduler that would force all modules to use the most conservative lookahead value corresponding to inter-switch propagation delay 200B.

The mixed timescales between intra-switch and inter-switch communications allow GPU application 52 to optimize event processing by permitting modules within the same switch to process events more aggressively while maintaining correctness across switch boundaries. Switch module 150A, switch module 150B, switch module 150C, switch module 150D, switch module 150E, and switch module 150F each independently compute their respective minimum enqueue time promises based on their respective propagation delays to adjacent components. Modules connected via intra-switch propagation delay 200A benefit from larger lookahead windows that enable processing of more events per iteration, while modules connected via inter-switch propagation delay 200B use smaller lookahead windows that ensure event causality is preserved across the longer propagation paths.

The decentralized approach enables simulation server 42 to maximize parallelism by allowing each module to process as many events as safely possible based on local timing constraints. A centralized synchronization algorithm would determine a single global lookahead value for all modules based on the most conservative propagation delay in simulated data network 110, which would correspond to inter-switch propagation delay 200B. This global constraint would force modules within the same switch to use the conservative microsecond-scale lookahead value even though intra-switch propagation delay 200A permits nanosecond-scale lookahead values. By enabling each module to use its own lookahead value, the decentralized algorithm allows modules connected via intra-switch propagation delay 200A to process events at a finer granularity than modules connected via inter-switch propagation delay 200B, thereby increasing the overall throughput of the simulation.

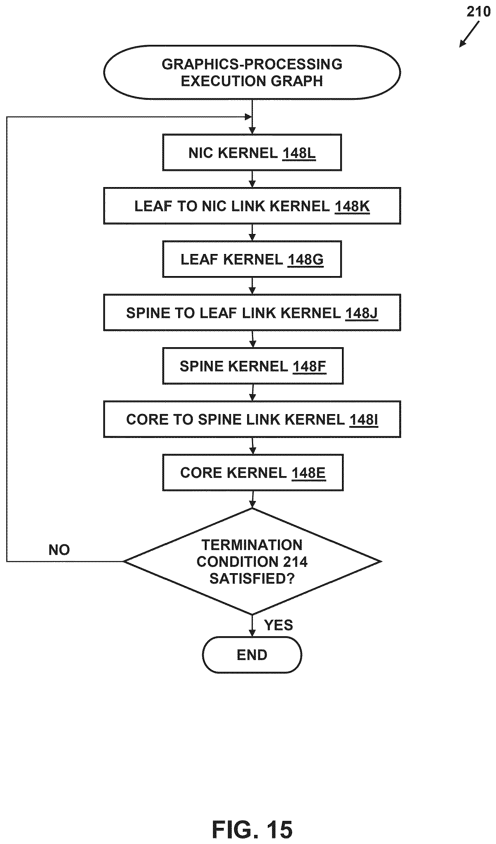

FIG. 15 illustrates a flowchart for a graphics-processing execution graph 210 that defines the execution flow of GPU kernels for simulating data network 34. Graphics-processing execution graph 210 represents a directed acyclic graph (DAG) of GPU kernels that controls the simulation workflow executed by simulation server 42. GPU application 52 uses CUDA graphs to encapsulate the simulation workflow as a directed acyclic graph where only the first iteration of kernel launches is from controller processor 46 and GPUs 54 memorize and repeat the launch order until termination.

Graphics-processing execution graph 210 begins with NIC kernel 148L, which processes events associated with network interface cards in simulated data network 110. NIC kernel 148L handles event processing for all NICs defined by communication topology definition 50, generating packets that are transmitted into the network. The flow then proceeds to leaf to NIC link kernel 148K, which handles events for links connecting leaf switches to network interface cards. Leaf to NIC link kernel 148K transfers events from NICs to leaf switches, moving packets upward in the network hierarchy.

Following leaf to NIC link kernel 148K, the execution proceeds to leaf kernel 148G, which processes events for leaf-level switches in the network topology. Leaf kernel 148G processes packets received from NICs via the leaf to NIC links and determines forwarding decisions for packets destined for higher levels of the network hierarchy. The flow then continues to spine to leaf link kernel 148J, which handles events for links connecting spine switches to leaf switches. Spine to leaf link kernel 148J transfers events from leaf switches to spine switches, continuing the upward movement of packets through the network.

With continued reference to FIG. 15, spine kernel 148F is executed next, processing events for spine-level switches in the hierarchical network topology. Spine kernel 148F processes packets received from leaf switches and forwards packets toward the core layer of the network. The execution then proceeds to core to spine link kernel 148I, which handles events for links connecting core switches to spine switches. Core to spine link kernel 148I transfers events from spine switches to core switches, completing the upward path of packet transmission.

Core kernel 148E follows, processing events for core-level switches at the top of the network hierarchy. Core kernel 148E processes packets that have traversed upward through the network and determines forwarding decisions for the downward path toward destination NICs. After core kernel 148E completes execution, the flow reaches a decision point that evaluates whether a termination condition 214 is satisfied.

Graphics-processing execution graph 210 comprises a condition node that executes at the end of each iteration to evaluate termination condition 214. The condition node checks completion criteria to determine whether the simulation has reached a state that warrants termination. Termination condition 214 comprises criteria such as simulation time 94 reaching a predefined simulation end time, flow completion where a specified number of NICs have completed their assigned flows, or error count 96 exceeding an error threshold. The condition node reads program state parameters 78 stored in global memory 62 to evaluate whether termination condition 214 is satisfied.

If termination condition 214 is not satisfied, the execution flow loops back to NIC kernel 148L to begin another iteration of the simulation. This loop continues with GPUs 54 executing the sequence of GPU kernels in the order defined by graphics-processing execution graph 210 until termination condition 214 is met. If termination condition 214 is satisfied, graphics-processing execution graph 210 proceeds to an end state, completing the simulation and transferring control flow back to controller processor 46.

Graphics-processing execution graph 210 enables kernel launch control flow to proceed on GPUs 54 after an initial invocation, without requiring run-time communication with controller processor 46 until termination condition 214 is satisfied. After controller processor 46 launches the first iteration of GPU kernels, GPUs 54 memorize the launch order specified by graphics-processing execution graph 210 and repeat the same control flow autonomously. This architecture eliminates the overhead associated with CPU-GPU communication during simulation execution, where each kernel launch would otherwise require a CUDA driver call that traverses the PCIe bus and incurs latency.

The directed acyclic graph structure of graphics-processing execution graph 210 specifies dependencies between GPU kernels that ensure correct execution order. Each GPU kernel in graphics-processing execution graph 210 depends on the completion of the preceding kernel, establishing a sequential execution flow that corresponds to the systolic kernel launch order based on the hierarchical structure of communication topology definition 50. The DAG structure enables GPUs 54 to determine the next kernel to execute without intervention from controller processor 46, as the execution order is encoded in graphics-processing execution graph 210 and stored on GPUs 54.

The graphics-processing execution graph is implemented using CUDA graph APIs that enable the simulation server to capture and instantiate the kernel execution workflow. During initialization, the network controller constructs the graphics-processing execution graph by adding graph nodes corresponding to each GPU kernel in the simulation workflow. Each graph node specifies the kernel function, the kernel launch parameters including grid dimensions and block dimensions, and the kernel arguments including pointers to component states in global memory. Dependencies between graph nodes are specified by adding edges that define the execution order, such that a downstream kernel node depends on the completion of upstream kernel nodes. The condition node that evaluates the termination condition is implemented as a conditional graph node that reads program state parameters from global memory and determines whether to continue iteration or terminate execution. Once the graphics-processing execution graph is constructed, the simulation server instantiates the graph to create an executable graph instance. The executable graph instance is launched on the GPU stream, and the GPU hardware executes the graph nodes according to the specified dependencies without requiring additional kernel launch calls from the host CPU. In some cases, the graphics-processing execution graph may be updated between iterations to modify kernel parameters or adjust execution flow based on simulation progress, though such updates may incur overhead compared to repeated execution of an unmodified graph.

In the vertical split partitioning strategy, the network controller analyzes the communication topology definition to determine the number of switches at each layer of the network hierarchy and divides the switches evenly across the available GPUs. For a fat-tree topology with N core switches, M spine switches, and L leaf switches partitioned across K GPUs, each GPU receives approximately N/K core switches, M/K spine switches, and L/K leaf switches. The network adapters connected to the leaf switches assigned to each GPU are also assigned to that GPU, maintaining locality between leaf switches and their connected network adapters. Links connecting components within the same GPU partition are designated as within-partition links and are stored in the global memory of that GPU. Links connecting components across different GPU partitions are designated as cross-partition links and are associated with cross-GPU event queues stored in shared memory. The vertical split partitioning strategy may balance computational workload across GPUs by ensuring each GPU processes a similar number of components at each layer of the hierarchy. In some aspects, the partitioning strategy may consider the connectivity patterns of the topology to minimize the number of cross-partition links, thereby reducing the volume of inter-GPU event transfers during simulation execution.

Simulation server 42 stores program state parameters 78 on GPUs 54 and updates program state parameters 78 without intervention by controller processor 46. Program state parameters 78 comprise simulation time 94 for each component, error count 96 for each component, and completed component 98 tracking which components have completed their simulation tasks. The condition node within graphics-processing execution graph 210 reads program state parameters 78 from global memory 62 to evaluate termination condition 214 at the end of each iteration. This design enables the termination evaluation to occur entirely on GPUs 54 without requiring data transfer to controller processor 46 for evaluation.

The use of graphics-processing execution graph 210 addresses the overhead associated with frequent GPU-CPU communication that would otherwise curtail application performance on GPUs 54. By encapsulating the simulation workflow as a directed acyclic graph, GPU application 52 enables simulation server 42 to execute the entire simulation on GPUs 54 with controller processor 46 involved only at initialization and termination. This architecture enables simulation server 42 to more fully saturate GPU compute units and avoid CPU overheads that would otherwise limit simulation throughput.

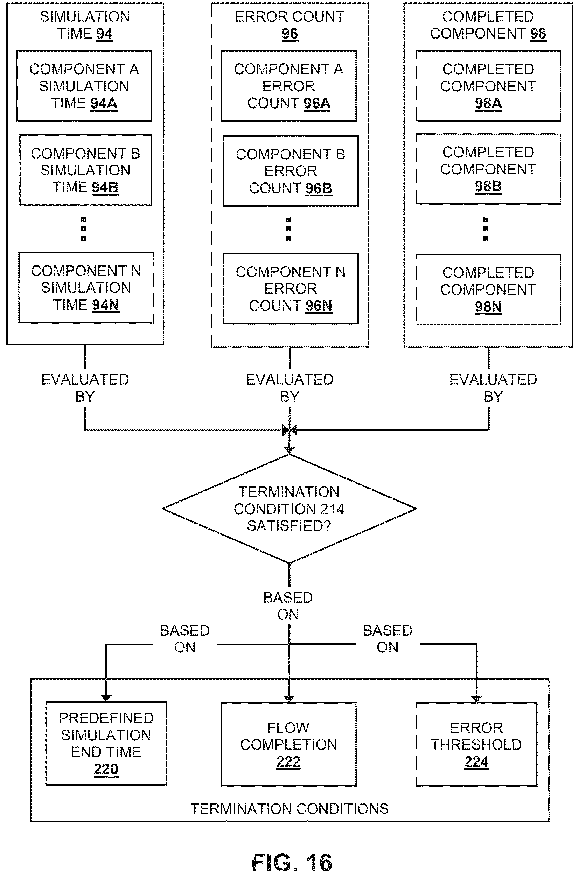

FIG. 16 is a block diagram that schematically illustrates program state parameters 78 and termination condition 214 used in GPU-based network simulation, in accordance with an embodiment of the present disclosure. The figure depicts three categories of program state parameters 78: simulation time 94, error count 96, and completed component 98. Each category of program state parameters 78 is evaluated by termination condition 214 to determine whether the simulation has reached a state that warrants termination.

In embodiments herein, different instances of simulation times 94, error counts 96 and completed components 98 can be differentiated by appending a letter to the identifying numeral, so that the simulation times comprise component A simulation time 94A - component N simulation time 94N, the error counts comprise error count 96A - component N error count 96N, and the completed components comprise completed components 98A-98N.

Simulation time 94 comprises component A simulation times 94A - 94N. Component A simulation time 94A tracks the current simulation time for Component A, indicating the timestamp up to which Component A has processed events. Component B simulation time 94B tracks the current simulation time for Component B, and component N simulation time 94N tracks the current simulation time for Component N. Each component of simulated data network 110 maintains its respective simulation time that advances as the component processes events during simulation execution. The simulation times for all components collectively represent the progress of the simulation across simulated data network 110.

With continued reference to FIG. 16, error count 96 comprises component A error counts 96A - N error count 96N. Component A error count 96A records the number of simulation errors that have occurred at Component A during execution. Component B error count 96B records the number of simulation errors at Component B, and component N error count 96N records the number of simulation errors at Component N. Simulation errors represent anomalous conditions detected during simulation execution, such as buffer overflows, dropped packets, or protocol violations. Each component maintains its respective error count that is incremented when the component detects an error condition during event processing.

Completed component 98 comprises completed components 98A - 98N. Completed component 98A indicates whether component A has completed its simulation tasks. Completed component 98B indicates whether component B has completed its simulation tasks, and completed component 98N indicates whether component N has completed its simulation tasks. A component is considered completed when the component has finished processing all assigned work, such as when a NIC has transmitted its entire assigned flow and received all acknowledgment packets from the destination NIC.

Termination condition 214 evaluates program state parameters 78 against one or more termination criteria to determine whether the simulation has completed. Termination condition 214 is based on one or more of three termination criteria: a predefined simulation end time 220, a flow completion 222, and an error threshold 224. The condition node within graphics-processing execution graph 210 evaluates termination condition 214 at the end of each iteration by reading program state parameters 78 from global memory 62.

Predefined simulation end time 220 specifies a target simulation time at which the simulation terminates. Termination condition 214 evaluates simulation time 94 against predefined simulation end time 220 by comparing component A simulation time 94A, component B simulation time 94B, and component N simulation time 94N to predefined simulation end time 220. When all components reach or exceed predefined simulation end time 220, termination condition 214 is satisfied based on the simulation time criterion. Each component maintains its respective internal clock that advances as the simulation progresses, and graphics-processing execution graph 210 exits when all components have advanced their respective simulation times to reach or exceed predefined simulation end time 220.

Flow completion 222 specifies a termination criterion based on network adapters completing transmission and acknowledgment of assigned data flows. A user provides flow size and traffic pattern parameters that define the data flows to be simulated, and each NIC in simulated data network 110 sends a flow of the specified size to another NIC based on the traffic pattern. Termination condition 214 evaluates completed component 98 against flow completion 222 by examining completed component 98A, completed component 98B, and completed component 98N. When the number of NICs that have completed their flows reaches the total number of NICs in simulated data network 110, termination condition 214 is satisfied based on the flow completion criterion. A NIC is considered to have completed its flow when the NIC has transmitted its entire assigned flow and received all acknowledgment packets from the destination NIC.

Error threshold 224 specifies a maximum number of simulation errors that the simulation tolerates before terminating. Termination condition 214 evaluates error count 96 against error threshold 224 by examining component A error count 96A, component B error count 96B, and component N error count 96N. When the number of simulation errors across simulated data network 110 reaches error threshold 224, termination condition 214 is satisfied based on the error criterion. This termination criterion enables the simulation to halt when an excessive number of errors indicates that the simulation results are unreliable or that a configuration problem exists in the simulated network.

Simulation server 42 stores program state parameters 78 on GPUs 54 and updates program state parameters 78 without intervention by controller processor 46. Component A simulation time 94A, component B simulation time 94B, and component N simulation time 94N are updated by the respective components as events are processed during each iteration. Component A error count 96A, component B error count 96B, and component N error count 96N are incremented by the respective components when error conditions are detected. Completed component 98A, completed component 98B, and completed component 98N are updated by the respective components when the components complete their assigned simulation tasks. The condition node within graphics-processing execution graph 210 reads these program state parameters 78 from global memory 62 to evaluate termination condition 214 at the end of each iteration, enabling the termination evaluation to occur entirely on GPUs 54 without requiring data transfer to controller processor 46.

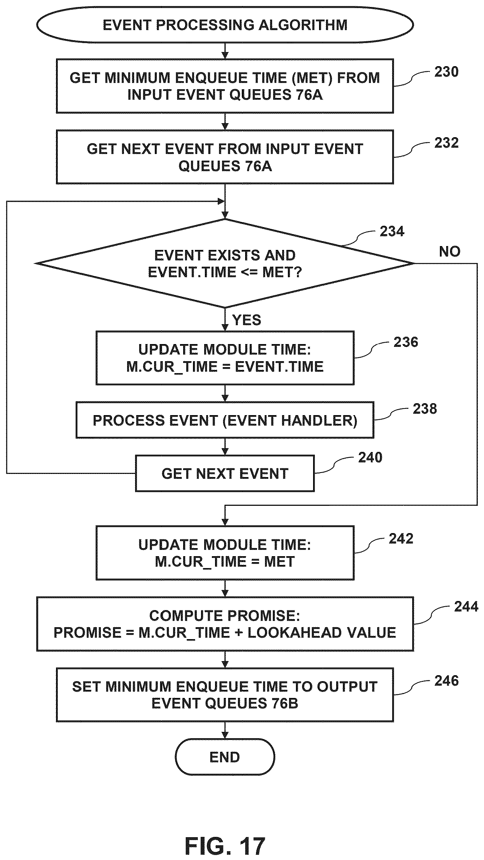

FIG. 17 illustrates a flowchart for an event processing algorithm used in simulating data network 34. The event processing algorithm defines the sequence of operations that each module executes to process timestamped events from input event queue 76A and propagate minimum enqueue time promises to output event queue 76B. GPU application 52 implements the event processing algorithm for each module within simulated data network 110, enabling modules to independently determine which events are safe to process while maintaining event causality across the simulation.

The event processing algorithm begins with a stage 230, where the system gets a minimum enqueue time (MET) from input event queue 76A. At stage 230, the module examines all input event queues 76A associated with the module and computes the minimum enqueue time across these queues. The minimum enqueue time represents the earliest timestamp at which a future event may appear in any of the input event queues 76A, based on the minimum enqueue time promises received from upstream modules. The module uses the computed minimum enqueue time to determine which events in input event queue 76A are safe to process without violating event causality.

The process then proceeds to a stage 232, where the system gets the next event from input event queue 76A. At stage 232, the module retrieves the event with the earliest timestamp from among all input event queues 76A associated with the module. When the module has multiple input event queues 76A, the module examines the head of each queue and selects the event with the smallest timestamp for processing. The retrieved event represents the next candidate event for processing by the module.

With continued reference to FIG. 17, the algorithm then moves to a stage 234, which is a decision point that checks whether an event exists and whether the event timestamp is less than or equal to the MET. At stage 234, the module evaluates two conditions: first, whether an event was successfully retrieved from input event queue 76A at stage 232, and second, whether the timestamp of the retrieved event is less than or equal to the minimum enqueue time computed at stage 230. An event with a timestamp less than or equal to the minimum enqueue time is considered safe to process because no events with earlier timestamps will arrive from upstream modules. If both conditions are satisfied, the event is safe to process and the algorithm proceeds along the Yes branch. If either condition is not satisfied, the algorithm proceeds along the No branch.

If the condition at stage 234 is satisfied, the process proceeds to a stage 236, where the module time is updated by setting M.CUR _TIME equal to EVENT. TIME. At stage 236, the module advances its local timestamp to match the timestamp of the event being processed. This update reflects that the module has progressed to the simulation time corresponding to the current event. The module's current time tracks the simulation time up to which the module has processed events, and updating the module time to the event timestamp ensures that the module's local timestamp accurately reflects the progress of event processing.

Following stage 236, the process moves to a stage 238, where the event is processed by an event handler. At stage 238, the module executes the event handling logic appropriate for the type of event being processed. For a switch module, the event handler examines packet header information and consults forwarding table 84 to determine the appropriate egress port for the packet. For a NIC module, the event handler generates or receives packets according to the simulation logic. The event handler generates output events that are enqueued to output event queue 76B for transmission to downstream modules. Stage 238 represents the core simulation logic that transforms input events into output events according to the behavior of the simulated network component.

The algorithm then proceeds to a stage 240, where the system gets the next event from input event queue 76A. Stage 240 retrieves the next candidate event for processing, similar to stage 232. After retrieving the next event, the process returns to stage 234 to evaluate whether the retrieved event is safe to process. The loop comprising stage 234, stage 236, stage 238, and stage 240 continues as long as events exist in input event queue 76A with timestamps less than or equal to the minimum enqueue time. This loop enables the module to process all safe events within the current iteration before advancing to the next phase of the algorithm.

If the condition at stage 234 is not satisfied, indicating that no event exists or the event timestamp exceeds the MET, the process proceeds to a stage 242, where the module time is updated by setting M.CUR_TIME equal to MET. At stage 242, the module advances its local timestamp to the minimum enqueue time, reflecting that the module has processed all events up to the minimum enqueue time and is ready to proceed to the next iteration. This update ensures that the module's local timestamp accurately represents the simulation time up to which all events have been processed, even when no events with timestamps up to the minimum enqueue time were present in input event queue 76A.

With continued reference to FIG. 17, the algorithm then moves to a stage 244, where a promise is computed by adding a lookahead value to M.CUR_TIME. At stage 244, the module computes the minimum enqueue time promise that the module will propagate to downstream modules via output event queue 76B. The promise is computed by adding the lookahead value to the module's current time, where the lookahead value corresponds to the propagation delay between the module and its adjacent downstream component. The computed promise indicates the earliest timestamp at which the module may enqueue a future event to output event queue 76B, enabling downstream modules to determine which events are safe to process.

Finally, the process proceeds to a stage 246, where the minimum enqueue time is set to output event queue 76B, and the algorithm ends. At stage 246, the module writes the computed promise to output event queue 76B, making the minimum enqueue time promise accessible to downstream modules that read from output event queue 76B. Downstream modules use the minimum enqueue time promise to compute their own minimum enqueue times at stage 230 of their respective event processing iterations. The propagation of minimum enqueue time promises through output event queue 76B enables the decentralized synchronization algorithm to maintain event causality across simulated data network 110 without requiring topology-wide coordination.

The event processing algorithm illustrated in FIG. 17 enables simulation server 42 to separate execution of graphics-processing execution graph 210 into discrete iterations where in each iteration all components process all events within the lookahead window. During each iteration, modules execute the event processing algorithm to process events with timestamps up to their respective minimum enqueue times. The loop comprising stage 234, stage 236, stage 238, and stage 240 processes all safe events within the current iteration, and stage 242, stage 244, and stage 246 prepare the module for the next iteration by updating the module time and propagating the minimum enqueue time promise.

The simulation employs blocking synchronization stages between link kernels and switch kernels to ensure correct event ordering across iterations. After all switch and NIC kernels complete processing events within their respective lookahead windows, link kernels execute to transfer events from output event queues 76B of source modules to input event queues 76A of destination modules. The blocking synchronization ensures that events generated during one iteration are available in the input event queues of destination modules before the next iteration begins. This separation of event processing and event transfer into distinct phases within each iteration enables GPU application 52 to maintain event causality while maximizing parallel processing of events across simulated data network 110.

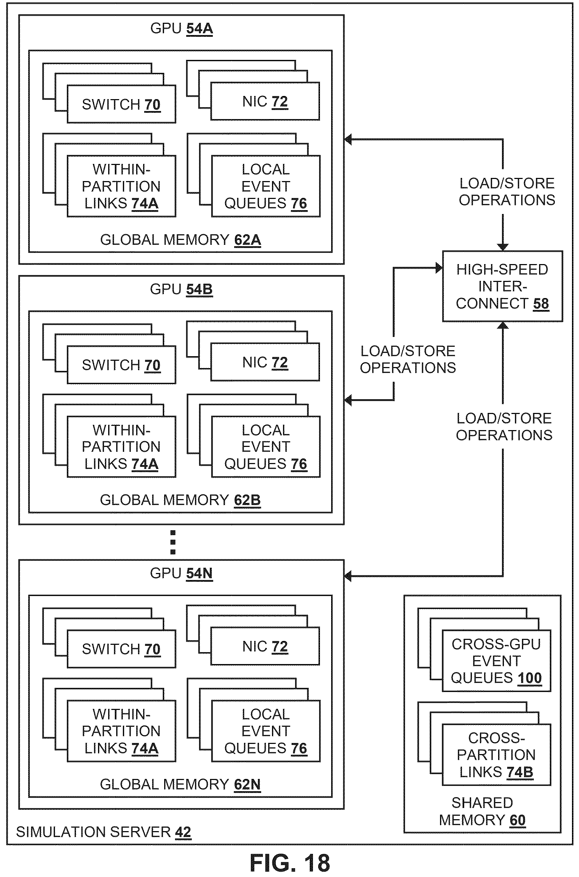

FIG. 18 illustrates a block diagram of a multi-GPU transparent scaling architecture for simulation server 42 in accordance with an embodiment of the present disclosure. Simulation server 42 comprises a plurality of GPUs interconnected via high-speed interconnect 58, enabling the simulation to scale to large network topologies that exceed the memory capacity of any single GPU.

In embodiments herein, different instances of GPUs 54 and global memories 62 can be differentiated by appending a letter to the identifying numeral, so that the GPUs comprise GPUs 54A-54N and the global memories comprise global memory 62A-62N.

The plurality of GPUs comprises GPUs 54A - GPU 54N, which are interconnected via high-speed interconnect 58. High-speed interconnect 58 facilitates load/store operations between the GPUs and provides access to shared memory 60.

High-speed interconnect 58 comprises NVLINK that delivers high-bandwidth communication between GPUs 54A - 54N. NVLINK provides a total GPU-to-GPU bandwidth of 600 GB/s, enabling efficient transfer of events across GPU boundaries during simulation execution. The high-bandwidth, low-latency communication provided by high-speed interconnect 58 enables simulation server 42 to partition simulated data network 110 across the plurality of GPUs while maintaining efficient inter-GPU communication for events that traverse partition boundaries.

With continued reference to FIG. 18, AI server 32 comprises a DGX server hosting eight GPUs 54 with high-bandwidth memory accessible at TB/s bandwidth from hundreds of thousands of GPU threads 66. Each GPU within the DGX server contains streaming multiprocessors that execute GPU threads 66 in a single instruction multiple threads fashion, providing massive parallelism for network simulation workloads. The DGX server architecture provides the computational resources and memory bandwidth required to simulate large-scale network topologies at high throughput.

Each GPU 54 within simulation server 42 comprises its own global memory 62 for storing the state of network components assigned to that GPU. GPU 54A comprises global memory 62A, GPU 54B comprises global memory 62B, and GPU 54N comprises global memory 62N. Global memories 62A - 62N store the states of network components that reside within the respective GPU partitions, providing persistent storage accessible by GPU threads 66 executing on each respective GPU.

Within each global memory, the architecture stores components of simulated data network 110 that are assigned to the respective GPU partition. Global memory 62A stores switch 70, simulated NIC 72, within-partition link 74A, and local event queue 76 for the partition assigned to GPU 54A. Similarly, global memory 62B stores switch 70, simulated NIC 72, within-partition link 74A, and local event queue 76 for the partition assigned to GPU 54B. Global memory 62N stores switch 70, simulated NIC 72, within-partition link 74A, and local event queue 76 for the partition assigned to GPU 54N. Within-partition link 74A represents links between components that reside on the same GPU partition, enabling event transfer between adjacent components without crossing GPU boundaries.

Simulation server 42 partitions data network 34 across the plurality of GPUs using a vertical split partitioning strategy. In the vertical split partitioning strategy, each GPU contains the same number of switches of each type, with links crossing partition boundaries designated as cross-partition links. This partitioning approach distributes the computational workload evenly across GPUs 54A - 54N by assigning equal numbers of core switches, spine switches, and leaf switches to each GPU partition. The vertical split partitioning strategy ensures that each GPU processes a balanced portion of the simulation workload while minimizing the number of cross-partition links that require inter-GPU communication.

Shared memory 60 is accessible by GPUs 54A - 54N via high-speed interconnect 58. Shared memory 60 stores cross-GPU event queue 100 and cross-partition link 74B. Cross-partition link 74B represents links between components that reside on different GPU partitions, enabling simulation of network links that span GPU boundaries. Cross-GPU event queue 100 facilitates event transfer between modules residing on different GPUs by providing a queue accessible by GPUs on both sides of the partition boundary.

The multi-GPU transparent scaling architecture enables simulation server 42 to simulate network topologies that exceed the memory capacity of any single GPU by distributing network components across GPUs 54A - 54N. Each GPU performs load/store operations to access shared memory 60 through high-speed interconnect 58, enabling events to be transferred across GPU boundaries without requiring collective communication primitives. GPUs 54A - 54N access cross-GPU event queue 100 in shared memory 60 using one-sided get and put operations, which are initiated and completed from the GPU side without involving controller processor 46. This design allows simulation server 42 to scale the simulated network size beyond the memory capacity of any single GPU while maintaining efficient inter-GPU communication through the shared memory abstraction provided by high-speed interconnect 58.

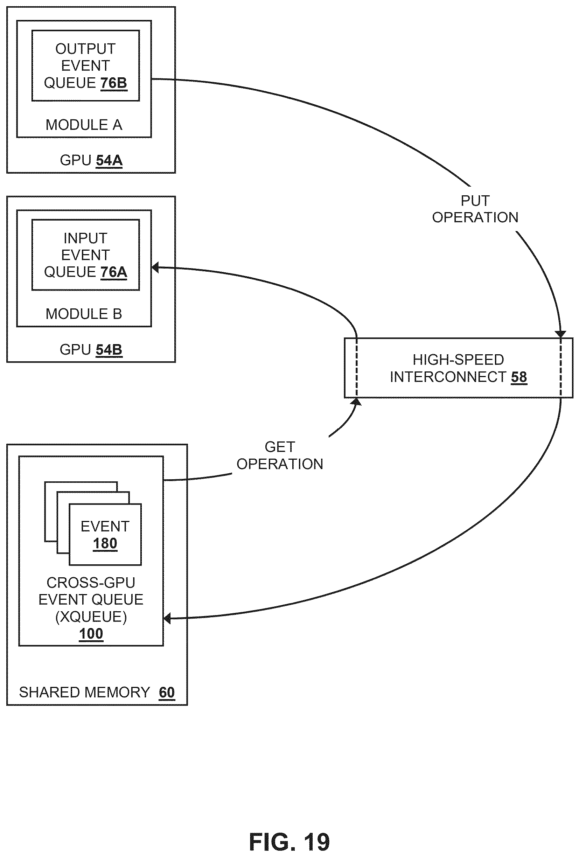

FIG. 19 illustrates a block diagram of a cross-GPU event transfer architecture via cross-GPU event queues, in accordance with an embodiment of the present disclosure. The architecture comprises GPU 54A, GPU 54B, high-speed interconnect 58, and shared memory 60. The cross-GPU event transfer architecture enables simulation server 42 to transfer events across GPU boundaries using load/store operations via a shared memory abstraction rather than collective communication primitives such as NCCL.

GPU 54A contains output event queue 76B associated with a first module designated as Module A. GPU 54B contains input event queue 76A associated with a second module designated as Module B. Module A and Module B reside on different GPUs within simulation server 42, with Module A generating events that are consumed by Module B during simulation execution. The cross-GPU event transfer architecture enables events generated by Module A on GPU 54A to be transferred to Module B on GPU 54B through shared memory 60.

Shared memory 60 contains cross-GPU event queue 100, which stores events that traverse the GPU boundary between GPU 54A and GPU 54B. Cross-GPU event queue 100 stores a plurality of timestamped events 180 representing events that are transferred between Module A on GPU 54A and Module B on GPU 54B during simulation execution. Cross-GPU event queue 100 provides the intermediate storage that enables asynchronous event transfer between modules residing on different GPUs.

With continued reference to FIG. 19, cross-GPU event queue 100 is allocated using NVSHMEM, which is an allocator that exploits the global memory space across GPUs as enabled by high-speed interconnect 58. NVSHMEM provides a shared memory abstraction that enables GPU 54A and GPU 54B to access cross-GPU event queue 100 using one-sided operations without requiring collective communication primitives. The allocation of cross-GPU event queue 100 using NVSHMEM enables simulation server 42 to transfer events across GPU boundaries efficiently by leveraging the load/store semantics of the shared memory abstraction.

Module A on GPU 54A writes events to cross-GPU event queue 100 via PUT operations through high-speed interconnect 58. When Module A generates output events during event processing, Module A enqueues the output events to cross-GPU event queue 100 in shared memory 60 using one-sided PUT operations. The PUT operations are initiated and completed from GPU 54A without requiring involvement of controller processor 46 or coordination with GPU 54B. GPU 54A executes the PUT operations as load/store memory operations that transfer event data from output event queue 76B on GPU 54A to cross-GPU event queue 100 in shared memory 60.

Module B on GPU 54B reads events from cross-GPU event queue 100 via GET operations through high-speed interconnect 58. When Module B retrieves input events for processing, Module B dequeues events from cross-GPU event queue 100 in shared memory 60 using one-sided GET operations. The GET operations are initiated and completed from GPU 54B without requiring involvement of controller processor 46 or coordination with GPU 54A. GPU 54B executes the GET operations as load/store memory operations that transfer event data from cross-GPU event queue 100 in shared memory 60 to input event queue 76A on GPU 54B.

The one-sided GET and PUT operations provide advantages over collective communication primitives for cross-GPU event transfer in network simulation. Collective communication primitives such as NCCL are optimized for bulk data movement where transfer sizes are known in advance and data resides in contiguous memory regions. Network simulation presents different characteristics where event queues are colocated with their kernels at disparate memory locations, and the amount of event transfer depends on per-module simulation progress rather than predetermined transfer sizes. The one-sided GET and PUT operations enabled by NVSHMEM accommodate these characteristics by allowing GPU 54A and GPU 54B to transfer small, variable-sized batches of events between non-contiguous memory locations without the overhead of setting up NCCL contexts.

The cross-GPU event transfer architecture eliminates the overhead associated with marshalling and demarshalling data into messages that would be required when using collective communication primitives. Since GET and PUT operations are load/store memory operations, GPU 54A and GPU 54B transfer event data directly between cross-GPU event queue 100 and their respective local event queues without converting events into message formats. Timestamped events 180 are transferred in their native data representations, avoiding the computational overhead and memory allocation associated with message serialization and deserialization.

The cross-GPU event transfer architecture enables simulation server 42 to scale the simulation transparently across GPUs 54A - 54N without requiring CPU involvement during event transfer. Cross-GPU event queue 100 is accessible by GPU 54A and GPU 54B through high-speed interconnect 58, and the one-sided GET and PUT operations are initiated and completed entirely from the GPU side. This design enables simulation server 42 to transfer events across GPU boundaries as part of the simulation execution flow defined by graphics-processing execution graph 210, without requiring controller processor 46 to coordinate the transfers or manage communication contexts. The transparent scaling architecture enables simulation server 42 to simulate network topologies that span multiple GPUs while maintaining the performance benefits of GPU-based discrete event simulation.

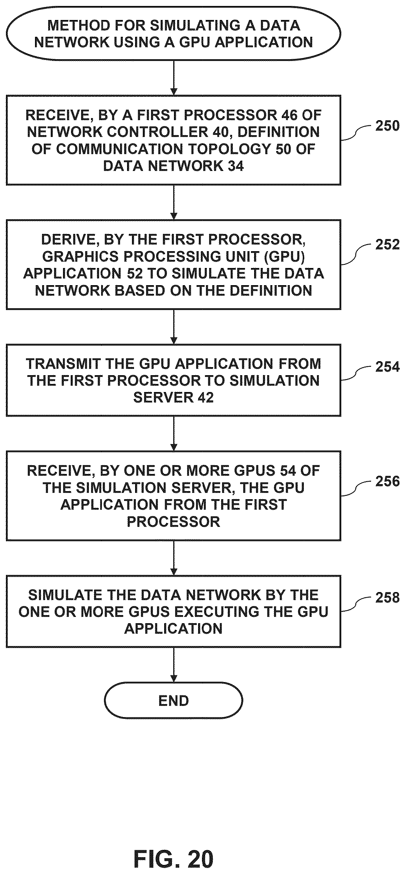

FIG. 20 illustrates a flowchart for a method for simulating data network 34 using GPU application 52. The method defines the sequence of operations performed by computing system 30 to receive a communication topology definition, derive a GPU application configured to simulate the data network, and execute the GPU application on GPUs to perform the network simulation. The method distributes processing responsibilities between network controller 40 and simulation server 42, with network controller 40 performing initialization tasks and simulation server 42 executing the simulation on GPUs 54.

The method begins with a stage 250, where controller processor 46 of network controller 40 receives communication topology definition 50 of data network 34. At stage 250, controller processor 46 obtains the specification that defines the structure and interconnections of the data network to be simulated. Communication topology definition 50 specifies the arrangement of network components comprising switches, network adapters, and links, along with the connectivity relationships between these components. Communication topology definition 50 defines the hierarchical structure of the network, such as a fat-tree topology with core switches, spine switches, and leaf switches, or a leaf-spine topology with two levels of switches. Controller processor 46 receives communication topology definition 50 from an external source, such as a user interface, a configuration file, or a network management system that provides the topology specification.

The method then proceeds to a stage 252, where controller processor 46 derives GPU application 52 to simulate data network 34 based on communication topology definition 50. At stage 252, controller processor 46 generates executable code configured for execution on GPUs 54 to perform discrete event simulation of the data network specified by communication topology definition 50. Controller processor 46 derives GPU application 52 by analyzing communication topology definition 50 to determine the network components to be simulated, the interconnections between components, and the event handling logic required for each component type. Controller processor 46 generates GPU kernels for simulating switches, network adapters, and links according to the structure defined by communication topology definition 50. Controller processor 46 organizes the GPU kernels into graphics-processing execution graph 210 that defines the directed acyclic graph of kernel execution for the simulation. Controller processor 46 derives GPU application 52 by laying out data in global memory 62 so as to optimize coalesced memory access by GPUs 54, organizing component states in consecutive memory locations according to the data-oriented memory layout.

Following stage 252, the method moves to a stage 254, where GPU application 52 is transmitted from controller processor 46 to simulation server 42. At stage 254, controller processor 46 transfers GPU application 52 to simulation server 42 via communication path 44. The transmission comprises transferring the executable code of GPU application 52, including the GPU kernels and graphics-processing execution graph 210, along with the initial state data for the simulated network components. Controller processor 46 transmits the data structures representing switch states, NIC states, link states, and event queues to simulation server 42 for storage in GPU memory 56. The transmission at stage 254 prepares simulation server 42 to execute the simulation by providing all code and data required for GPU application 52 to simulate data network 34 according to communication topology definition 50.

The method continues to a stage 256, where GPUs 54 of simulation server 42 receive GPU application 52 from controller processor 46. At stage 256, simulation server 42 receives the transmitted GPU application 52 and stores the executable code and initial state data in GPU memory 56. GPUs 54 receive the GPU kernels comprising NIC kernel 148L, leaf to NIC link kernel 148K, leaf kernel 148G, spine to leaf link kernel 148J, spine kernel 148F, core to spine link kernel 148I, and core kernel 148E. GPUs 54 receive graphics-processing execution graph 210 that defines the execution order and dependencies among the GPU kernels. GPUs 54 receive the initial state data comprising switch state 80, NIC state 86, and link state 170 for the network components defined by communication topology definition 50. GPUs 54 store the received data in global memory 62 and shared memory 60 according to the memory organization specified by GPU application 52, with within-partition components stored in global memory 62 and cross-partition event queues stored in shared memory 60.

The method then proceeds to a stage 258, where data network 34 is simulated by GPUs 54 executing GPU application 52. At stage 258, simulation server 42 performs the discrete event simulation of data network 34 by executing the GPU kernels according to graphics-processing execution graph 210. GPUs 54 execute GPU threads 66 to process timestamped events for the network components defined by communication topology definition 50. Each GPU thread 66 processes events for a respective module of the simulated data network, with switch modules, NIC modules, and link modules mapped to individual GPU threads 66 according to the granular module decomposition architecture.

At stage 258, GPUs 54 execute the simulation using the systolic kernel launch order based on the hierarchical structure of communication topology definition 50. GPUs 54 launch NIC kernel 148L to process events at network adapters, followed by leaf to NIC link kernel 148K to transfer events to leaf switches, followed by leaf kernel 148G to process events at leaf switches. The execution continues through spine to leaf link kernel 148J, spine kernel 148F, core to spine link kernel 148I, and core kernel 148E to process events through the upward path of the network hierarchy. The execution then reverses to process events through the downward path toward destination network adapters.

At stage 258, simulation server 42 executes GPU application 52 without requiring run-time communication between GPUs 54 and controller processor 46 after the initial invocation at stage 256. After controller processor 46 launches the first iteration of GPU kernels, GPUs 54 memorize the launch order specified by graphics-processing execution graph 210 and repeat the same control flow autonomously until termination condition 214 is satisfied. GPUs 54 store program state parameters 78 in global memory 62 and update program state parameters 78 without intervention by controller processor 46. The condition node within graphics-processing execution graph 210 evaluates termination condition 214 at the end of each iteration by reading program state parameters 78 from global memory 62. When termination condition 214 is satisfied, graphics-processing execution graph 210 proceeds to an end state, completing the simulation and transferring control flow back to controller processor 46.

The method illustrated in FIG. 20 enables computing system 30 to simulate data network 34 at scale by leveraging the parallel processing capabilities of GPUs 54. The division of responsibilities between network controller 40 and simulation server 42 enables controller processor 46 to perform initialization tasks including receiving communication topology definition 50 and deriving GPU application 52, while simulation server 42 executes the computationally intensive simulation on GPUs 54. The elimination of run-time communication between GPUs 54 and controller processor 46 during stage 258 enables simulation server 42 to fully utilize the parallel processing capabilities of GPUs 54 without incurring the overhead associated with CPU-GPU communication during simulation execution.

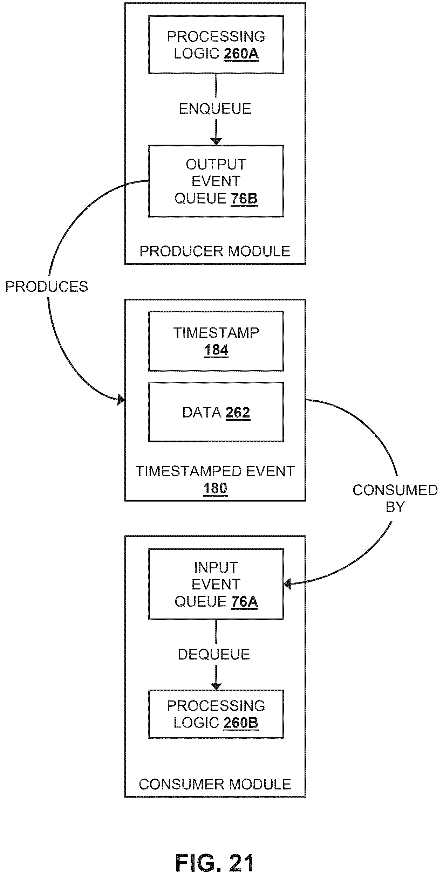

FIG. 21 illustrates a block diagram of a producer-consumer event queue abstraction in accordance with an embodiment of the present disclosure. The diagram depicts the flow of timestamped events between a producer module and a consumer module within the GPU-based network simulation system. The producer-consumer event queue abstraction provides the communication mechanism that enables modules within simulated data network 110 to exchange events asynchronously while maintaining proper event ordering through timestamps.

The producer module comprises a processing logic 260A that generates output events during simulation execution. Processing logic 260A implements the event handling logic for the producer module, which processes input events and generates corresponding output events based on the simulation behavior of the network component represented by the producer module. Processing logic 260A enqueues output events to be transmitted to downstream components in simulated data network 110. The producer module represents any component of the simulated data network, such as switch 70, simulated NIC 72, or a link, that generates events for consumption by adjacent downstream components.

Processing logic 260A produces timestamped event 180, which serves as the unit of communication between modules in the discrete event simulation implemented by GPU application 52. Timestamped event 180 comprises a timestamp 184 and a data 262. Timestamp 184 indicates when the event occurs in simulation time, specifying the simulation time at which the event takes effect at the destination module. Data 262 contains the payload or information associated with the event, such as packet contents, header information, or state updates that the destination module processes when handling the event. The combination of timestamp 184 and data 262 within timestamped event 180 enables the discrete event simulation to maintain temporal ordering of events while conveying the substantive information required for event processing.

With continued reference to FIG. 21, timestamped event 180 is consumed by the consumer module. The consumer module comprises input event queue 76A that receives and queues incoming timestamped events from the producer module. Input event queue 76A stores timestamped event 180 until the event is ready to be processed based on the simulation's causality requirements as determined by the decentralized synchronization algorithm. Input event queue 76A maintains events in timestamp order, enabling the consumer module to retrieve events with the earliest timestamps for processing while ensuring that events are not processed out of order.

The consumer module further comprises a processing logic 260B that dequeues events from input event queue 76A and processes the events according to the simulation logic implemented by GPU application 52. Processing logic 260B retrieves timestamped event 180 from input event queue 76A through a dequeue operation when the event is determined to be safe for processing based on the minimum enqueue time computed by the consumer module. Processing logic 260B examines timestamp 184 to verify that the event timestamp is less than or equal to the minimum enqueue time before processing the event. Processing logic 260B then processes data 262 according to the event handling logic appropriate for the type of event and the network component represented by the consumer module.

The producer-consumer event queue abstraction enables modules within GPU application 52 to communicate asynchronously while maintaining proper event ordering through timestamp 184. Processing logic 260A of the producer module generates timestamped event 180 and enqueues the event without requiring synchronization with processing logic 260B of the consumer module. Processing logic 260B of the consumer module retrieves and processes timestamped event 180 from input event queue 76A according to the event processing algorithm, which ensures that events are processed in timestamp order to preserve event causality. This asynchronous communication pattern enables GPU threads 66 executing processing logic 260A and processing logic 260B to operate independently, maximizing parallel processing across simulated data network 110.

The producer-consumer event queue abstraction supports the decentralized synchronization approach where each module operates on its local event queues, reducing contention compared to a centralized global event queue design. Processing logic 260A enqueues timestamped event 180 to output event queue 76B of the producer module, and the event is subsequently transferred to input event queue 76A of the consumer module during the link kernel execution phase of each iteration. Processing logic 260B dequeues timestamped event 180 from input event queue 76A and processes data 262 according to the event handler logic. The producer module and consumer module represent any components of simulated data network 110, such as switches, network adapters, or links, enabling the producer-consumer abstraction to support event communication across all types of network components defined by communication topology definition 50.

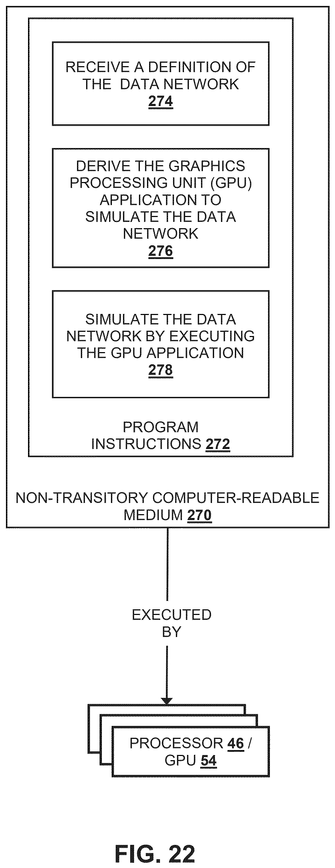

FIG. 22 illustrates a block diagram of a non-transitory computer-readable medium 270 storing program instructions 272 that are executed by controller processor 46 and GPU 54. Non-transitory computer-readable medium 270 comprises a storage medium that retains data and instructions for access by one or more processors to perform the method for simulating data network 34. Non-transitory computer-readable medium 270 stores program instructions 272 that, when executed by one or more processors comprising controller processor 46 and GPU 54, cause the one or more processors to perform the simulation method described herein.

Program instructions 272 comprise executable code that implements the operations for receiving a communication topology definition, deriving a GPU application, and simulating the data network using the derived GPU application. Program instructions 272 are stored on non-transitory computer-readable medium 270 in a format accessible by controller processor 46 and GPU 54 for retrieval and execution. Non-transitory computer-readable medium 270 comprises one or more of controller memory 48 within network controller 40, GPU memory 56 within simulation server 42, or other storage media accessible by computing system 30.

With continued reference to FIG. 22, program instructions 272 comprise a receive definition instruction 274, a derive GPU application instruction 276, and a simulate data network instruction 278. Receive definition instruction 274, derive GPU application instruction 276, and simulate data network instruction 278 collectively define the operations that controller processor 46 and GPU 54 perform to simulate data network 34 according to communication topology definition 50.

Receive definition instruction 274 causes controller processor 46 to receive communication topology definition 50 of data network 34. When controller processor 46 executes receive definition instruction 274, controller processor 46 obtains the specification that defines the structure and interconnections of the data network to be simulated. Receive definition instruction 274 causes controller processor 46 to accept communication topology definition 50 from an external source and store communication topology definition 50 in controller memory 48 for subsequent processing by derive GPU application instruction 276.

Derive GPU application instruction 276 causes controller processor 46 to derive GPU application 52 to simulate data network 34 based on communication topology definition 50. When controller processor 46 executes derive GPU application instruction 276, controller processor 46 generates executable code configured for execution on GPU 54 to perform discrete event simulation of the data network specified by communication topology definition 50. Derive GPU application instruction 276 causes controller processor 46 to analyze communication topology definition 50, generate GPU kernels for simulating switches, network adapters, and links, organize the GPU kernels into graphics-processing execution graph 210, and lay out data in global memory 62 to optimize coalesced memory access by GPU 54.

Simulate data network instruction 278 causes GPU 54 to simulate data network 34 by executing GPU application 52. When GPU 54 executes simulate data network instruction 278, GPU 54 performs the discrete event simulation by executing GPU threads 66 to process timestamped events for the network components defined by communication topology definition 50. Simulate data network instruction 278 causes GPU 54 to execute the GPU kernels according to graphics-processing execution graph 210, process events using the decentralized synchronization algorithm, and continue execution until termination condition 214 is satisfied.

The execution of program instructions 272 is distributed between controller processor 46 and GPU 54 according to the respective capabilities of each processor. Controller processor 46 executes receive definition instruction 274 and derive GPU application instruction 276 to perform initialization tasks comprising receiving communication topology definition 50 and generating GPU application 52. GPU 54 executes simulate data network instruction 278 to perform the computationally intensive simulation using the parallel processing capabilities of GPU architecture 130. This distribution of execution enables computing system 30 to leverage the strengths of both controller processor 46 for initialization and GPU 54 for parallel simulation execution.

Non-transitory computer-readable medium 270 comprises storage media that retain program instructions 272 in a non-volatile manner. Non-transitory computer-readable medium 270 comprises one or more of magnetic storage media, optical storage media, solid-state storage media, or other storage technologies that maintain stored data without requiring continuous power. Program instructions 272 stored on non-transitory computer-readable medium 270 persist across power cycles of computing system 30, enabling controller processor 46 and GPU 54 to retrieve and execute program instructions 272 upon system initialization.

The storage of program instructions 272 on non-transitory computer-readable medium 270 enables computing system 30 to perform the simulation method by loading and executing the stored instructions. Controller processor 46 retrieves receive definition instruction 274 and derive GPU application instruction 276 from non-transitory computer-readable medium 270 and executes these instructions to prepare GPU application 52 for simulation execution. GPU 54 retrieves simulate data network instruction 278 from non-transitory computer-readable medium 270, either directly or via transfer from controller processor 46, and executes simulate data network instruction 278 to perform the network simulation. The combination of receive definition instruction 274, derive GPU application instruction 276, and simulate data network instruction 278 stored on non-transitory computer-readable medium 270 enables computing system 30 to simulate data network 34 at scale using the GPU-assisted network simulation techniques described herein.

The components of the GPU-assisted network simulation system interact through a coordinated data flow that begins with the communication topology definition and proceeds through GPU application derivation to simulation execution on the GPUs. The network controller receives the communication topology definition that specifies the structure of the data network to be simulated, including the arrangement of switches, network adapters, and links. The controller processor analyzes the communication topology definition to determine the network components, their interconnections, and the event handling logic required for each component type. Based on this analysis, the controller processor derives the GPU application by generating GPU kernels for simulating the various network components and organizing these kernels into a graphics-processing execution graph that defines the directed acyclic graph of kernel execution.

The derivation of the GPU application involves host-device memory operations that prepare the simulation data for execution on the GPUs. The host CPU code allocates data structures in host memory first, establishing the initial state of the simulated network components including switch states, NIC states, and link states. The host CPU code then allocates the same amount of memory on the device, reserving space in GPU memory for the simulation data. The host CPU code copies the host data structure into device memory using *cudaMemcpy(),* transferring the initial state data from host memory to GPU memory. This sequence of host memory allocation, device memory allocation, and memory copy operations prepares the GPUs to execute the simulation with the initial network state established according to the communication topology definition.

The simulation server uses MPI internally via NVSHMEM to establish the rank of each NVSHMEM process and determine its association with a specific GPU. When the simulation server comprises multiple GPUs, each GPU is associated with an NVSHMEM process that has a unique rank within the MPI communicator. The rank assignment determines which partition of the simulated data network each GPU processes, with the network components distributed across the GPUs according to the partitioning strategy. The MPI-based GPU association enables the simulation server to coordinate cross-GPU event transfers through the shared memory abstraction provided by NVSHMEM, with each GPU knowing its rank and the ranks of GPUs that hold adjacent partitions of the simulated network.

The GPU kernels are configured with thread block sizes that correspond to the characteristics of the network components being simulated. The thread block size for switch kernels is set to the radix of the switch, where the radix corresponds to the number of ports on the switch. This configuration assigns one GPU thread to each port-related module within the switch, enabling the ingress queues, egress queues, and port modules to be processed in parallel within the thread block. NICs and links use a thread block size of 32, which corresponds to the warp size of the GPU architecture. This configuration enables efficient execution of NIC and link kernels by aligning the thread block size with the scheduling granularity of the GPU hardware.

The number of thread blocks per kernel depends on the number of components in that kernel. For the NIC kernel, the number of thread blocks corresponds to the total number of NICs in the simulated data network divided by the thread block size. For each switch kernel, the number of thread blocks corresponds to the number of switches at that layer of the network hierarchy. For each link kernel, the number of thread blocks corresponds to the number of links of that type divided by the thread block size. This configuration ensures that each component in the simulated data network is assigned to a GPU thread for processing, with the thread blocks distributed across the streaming multiprocessors of the GPU to maximize parallel execution.

The simulation server supports multiple routing mechanisms that determine how packets are forwarded through the simulated data network. The routing mechanisms comprise static routing where forwarding decisions are predetermined based on the network topology, equal-cost multi-path (ECMP) routing where packets are distributed across multiple paths of equal cost, and adaptive routing where forwarding decisions are made dynamically based on network conditions such as queue occupancy and link utilization. The GPU application implements the routing mechanisms within the forwarding logic of the switch kernels, with each switch consulting its forwarding table and applying the configured routing algorithm to determine the egress port for each packet.

The simulation server supports multiple traffic patterns that define how network adapters generate and direct traffic during simulation execution. The traffic patterns comprise bisection traffic patterns where each NIC sends traffic to another NIC crossing the entire network hierarchy, uniform random traffic where each NIC sends traffic to randomly selected destination NICs, and permutation traffic where each NIC sends traffic to a specific destination NIC according to a predetermined mapping. The bisection traffic pattern is particularly demanding because packets traverse the full depth of the network hierarchy, exercising all levels of switches and links in the simulated data network. The GPU application implements the traffic patterns within the NIC kernel, with each NIC generating packets destined for other NICs according to the configured traffic pattern.

The simulation server supports multiple network topologies that define the structure and interconnections of the simulated data network. The topologies comprise fat-tree topologies with multiple levels of switches including core, spine, and leaf layers, leaf-spine topologies with two levels of switches, and other hierarchical arrangements specified by the communication topology definition. The GPU application adapts to the specified topology by generating the appropriate GPU kernels for each layer of switches and each type of link defined by the topology. The systolic kernel launch order is configured according to the hierarchical structure of the topology, ensuring that kernels are launched in the correct sequence to simulate packet traversal through the network.

The simulation server comprises telemetry built into the simulator with tools to extract and view insights from the simulation execution. The telemetry tools comprise queue occupancy sampling that records the buffer utilization at switches and NICs at configurable intervals during simulation execution. The queue occupancy sampling operates at different levels of the network hierarchy, enabling analysis of buffer utilization at leaf switches, spine switches, and core switches separately. The telemetry data is stored in GPU memory during simulation execution and is transferred to host memory upon simulation completion for analysis and visualization. The telemetry tools enable network designers to understand the behavior of the simulated network under various traffic patterns and routing configurations, providing insights into congestion points, buffer utilization patterns, and network performance characteristics.

The simulation server achieves scalability to large network sizes by leveraging the parallel processing capabilities and high-bandwidth memory of the GPUs. The simulation server scales to networks with 524k NICs on a single DGX box using eight GPUs, where the simulated data network is partitioned across the eight GPUs with cross-partition links handled through the shared memory abstraction. This scale corresponds to simulating a data center network with over half a million network interface cards, which represents the scale of modern AI clusters that interconnect hundreds of thousands of GPUs. The transparent scaling architecture enables the simulation server to distribute the network components across multiple GPUs while maintaining efficient inter-GPU communication for events that traverse partition boundaries.

The simulation server achieves up to 60,000x greater performance than optimized CPU solutions on real-world network topologies. This performance advantage results from the combination of GPU-centric design techniques including the granular module decomposition that maximizes parallel execution, the module-local event queues that reduce thread contention, the decentralized synchronization algorithm that avoids topology-wide coordination, and the graphics-processing execution graph that eliminates CPU intervention during simulation execution. The performance comparison is measured against state-of-the-art CPU-based network simulators running on multi-core CPU platforms, with the GPU-based simulation server completing simulations in seconds that would require hours on CPU platforms. The performance advantage enables network designers to iterate rapidly on network designs and obtain insights at scales that were previously impractical with CPU-based simulation tools.

The configurations of network controller 40 and its components, (e.g., processor 46 and memory 48) and simulation server 42 and its components, (e.g., GPUs 54 and GPU memory 56) , as illustrated in Figs. 1 and 2, are example configurations chosen purely for the sake of conceptual clarity. In alternative embodiments, any other suitable configuration can be used.

Processor 46 and GPUs 54 may be implemented using suitable hardware, such as in one or more Application-Specific Integrated Circuits (ASICs) or Field-Programmable Gate Arrays (FPGAs), using software, or using a combination of hardware and software elements. Elements that are not mandatory for understanding of the disclosed techniques have been omitted from the figure for the sake of clarity.

**In** some embodiments, certain functions of processor 46 and/or GPUs 54 may be implemented in a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

It will thus be appreciated that the embodiments described above are cited by way of example, and that the present disclosure is not limited to what has been particularly shown and described hereinabove. Rather, the scope of the present disclosure includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A computing system, comprising:
a memory, to store a definition of a communication topology of a data network; and
one or more processors, to:
derive, from the definition, a graphics processing unit (GPU) application to simulate the data network, and
simulate the data network by executing the GPU application.

2. The computing system according to claim 1, wherein the GPU application implements a discrete event simulation (DES) that generates and responds to timestamped events, preferably wherein the computing system simulates the data network using one or more GPUs executing one or more GPU threads to process the timestamped events for components defined by the definition, the one or more GPU threads being associated with respective components.

3. The computing system according to claim 2, wherein the computing system preserves event causality using a decentralized synchronization algorithm in which:
each component maintains a respective local timestamp and computes a respective minimum enqueue time across its respective input event queues;
each component processes events having timestamps less than or equal to its respective minimum enqueue time; and
each component propagates a respective minimum enqueue time promise to its respective output event queues based on the component's local timestamp and a propagation delay to an adjacent component.

4. The computing system according to claim 2 or 3, wherein the timestamped events comprise input events and output events, and wherein, for a given component defined by the definition, the GPU application specifies one or more input event queues for queuing the input events to be processed by the given component and one or more output event queues for queuing the output events generated by the given component, wherein the input event queues and the output event queues comprise a plurality of first-in-first-out (FIFO) event queues that collectively emulate behavior of a centralized global priority queue while avoiding contention associated with use of a centralized global priority queue., wherein the given component is a switch defined by the definition, wherein the computing system is to maintain a priority queue to organize events across a plurality of incoming ports of the switch to select a next event to be processed by forwarding logic, and wherein, at a beginning of an iteration of event processing for the switch, events from a plurality of ingress FIFO queues of the switch are inserted into the priority queue and selecting the next event during the iteration comprises dequeuing from a head of the priority queue.

5. The computing system according to any of claims 1-4, wherein the computing system further comprises:
a network controller comprising a first processor to:
receive the definition of the communication topology, and
derive, from the definition, the GPU application; and
a simulation server comprising one or more second processors to:
receive the GPU application from the first processor, and
simulate the data network by executing the GPU application, wherein the one or more second processors comprise one or more GPUs.

6. The computing system according to claim 5, wherein the first processor derives the GPU application by laying out data in a memory accessible by the one or more GPUs so as to optimize coalesced memory access by the one or more GPUs.

7. The computing system according to claim 5 or 6, wherein the simulation server simulates the data network without requiring run-time communication between the one or more GPUs and the first processor after an initial invocation of the GPU application.

8. The computing system according to claim 5, 6, or 7, wherein the definition defines the data network as comprising multiple network adapters, multiple switches, and links interconnecting the multiple network adapters and the multiple switches, and wherein the network adapters, the switches, and the links comprise components of the data network.

9. The computing system according to claim 8, wherein the simulation server simulates the data network by organizing the components of the data network in consecutive memory locations on the one or more GPUs such that fields of a same component type are fetched together and processed by a same GPU kernel.

10. The computing system according to claim 8 or 9, wherein the simulation server simulates the data network by assigning a single GPU kernel of the GPU application to simulate all the network adapters, and assigning separate GPU kernels of the GPU application to simulate at least one layer of switches defined by the communication topology and at least one type of link among the links, wherein the simulation server simulates the data network by executing in parallel (i) a plurality of GPU kernels of the GPU application that simulate the links and (ii) a plurality of GPU kernels of the GPU application that simulate the network adapters and the switches.

11. The computing system according to any of claims 5-10, wherein the simulation server simulates the data network by executing the GPU application using a graphics-processing execution graph that defines a directed acyclic graph (DAG) of GPU kernels such that, after an initial invocation, kernel launch control flow proceeds on the one or more GPUs until a termination condition is satisfied.

12. The computing system according to claim 11, wherein:
the termination condition is based on a predefined simulation end time, and wherein each of the components of the data network as simulated maintains a respective internal clock that advances during simulation execution; and/or
the termination condition is based on flow completion and is satisfied when a number of the network adapters as simulated that complete a flow reaches a total number of the network adapters as simulated.

13. The computing system according to claim 11 or 12, wherein the simulation server stores, on the one or more GPUs, one or more program state parameters used to evaluate the termination condition and updates the one or more program state parameters on the one or more GPUs without intervention by the first processor, the one or more program state parameters including one or more of simulation time of each component, a number of simulation errors for each component, or a number of completed components.

14. A method of simulating a data network, the method comprising:
receiving, by a processor, a definition of the data network;
deriving, by the processor based on the definition, a graphics processing unit (GPU) application to simulate the data network; and
simulating the data network by executing the GPU application.

15. A non-transitory computer-readable medium storing program instructions that, when executed by one or more processors, cause the one or more processors to:
receive a definition of the data network;
derive a graphics processing unit (GPU) application to simulate the data network; and
simulate the data network by executing the GPU application.
